# EUROPEAN PATENT SPECIFICATION

(11) **EP 4 559 225 B1**
(45) Date of publication and mention of the grant of the patent: **10.12.2025**
(21) Application number: 23742478.3
(22) Date of filing: 10.07.2023
(51) Int. Cl.: H04W 24/10, H04W 76/27, H04W 24/08

(54) **STORING OF QOE AND RVQOE CONFIGURATIONS IN RRC_IDLE**
SPEICHERUNG VON QOE- UND RVQOE-KONFIGURATIONEN IN RRC_RUHEZUSTAND
STOCKAGE DE CONFIGURATIONS QOE ET RVQOE DANS RRC_IDLE

(30) Priority: 21.07.2022 US 202263391147 P
(43) Date of publication of application: 28.05.2025
(73) Proprietor: Telefonaktiebolaget LM Ericsson (publ), 164 83 Stockholm (SE)
(72) Inventor: EKLÖF, Cecilia, 187 41 Täby (SE); LUNARDI, Luca, 16145 Genova (IT); RUNE, Johan, 181 29 Lidingö (SE); BARAC, Filip, 141 92 Huddinge (SE)
(74) Representative: Ericsson
(86) International application number: PCT/SE2023/050724
(87) International publication number: WO 2024/019652

(56) References cited:
- US-A1- 2022 217 560
- HUAWEI ET AL: "QoE measurement handling at RAN overload", vol. TSG RAN, no. Online; 20210412 - 20210420, 2 April 2021 (2021-04-02), XP052175233, Retrieved from the Internet <URL:https://ftp.3gpp.org/tsg_ran/WG2_RL2/TSGR2_113bis-e/Docs/R2-2103911.zip> [retrieved on 20210402]
- CHINA UNICOM: "Summary document on AI 8.14 NR QoE SI", vol. RAN WG2, no. Electronic Meeting; 20210125 - 20210205, 23 January 2021 (2021-01-23), XP052170905, Retrieved from the Internet <URL:https://ftp.3gpp.org/tsg_ran/WG2_RL2/TSGR2_113-e/Docs/R2-2102243.zip> [retrieved on 20210123]
- "3 rd Generation Partnership Project; Technical Specification Group Radio Access Network; Study on NR QoE management and optimizations for diverse services (Release 17)", 7 April 2021 (2021-04-07), XP052178396, Retrieved from the Internet <URL:https://ftp.3gpp.org/tsg_ran/WG3_Iu/Draft_Specs/TSG-RAN91-e/draft_38890-h00.zip> [retrieved on 20210407]
- MINGZENG DAI ET AL: "QoE measurement configuration and collection in RRC_INACTIVE and RRC_IDLE", vol. 3GPP RAN 3, no. Athens, GR; 20230227 - 20230303, 17 February 2023 (2023-02-17), XP052244173, Retrieved from the Internet <URL:https://www.3gpp.org/ftp/TSG_RAN/WG3_Iu/TSGR3_119/Docs/R3-230328.zip> [retrieved on 20230217]

## Description

### Related Applications

This application claims the benefit of provisional patent application serial number 63/391,147, filed July 21, 2022.

### Technical Field

The present disclosure relates to a cellular communications system and, more specifically, to Quality of Experience (QoE) measurement and reporting in a cellular communications system.

### Background

### 1 Overview of the QoE framework

### 1.1 "Regular " QoE

Quality of Experience (QoE) measurements, also referred to as "application layer measurements", have been specified for Long Term Evolution (LTE) and Universal Mobile Telecommunications Service (UMTS) and are being specified for New Radio (NR) in 3^{rd} Generation Partnership Project (3GPP) release 17. The purpose of the application layer measurements is to measure the end user experience when using certain applications. Currently, QoE measurements for streaming services and for Mobility Telephony Service for Internet Protocol (IP) Multimedia Service (MTSI) services are supported. For NR, it is likely that at least Virtual Reality (VR) is added to the list of services for which QoE measurements are specified and supported.

The solutions in LTE and UMTS are similar with the overall principles as follows. Quality of Experience Measurement Collection (QMC) enables configuration of application layer measurements in the User Equipment (UE) and transmission of QoE measurement result files (commonly referred to as QoE reports) to the network by means of Radio Resource Control (RRC) signalling. An application layer measurement configuration (also called QoE measurement configuration or QoE configuration) that the Radio Access Network (RAN) receives from the Operations and Management (OAM) system or the Core Network (CN) is encapsulated in a transparent container, which is forwarded to a UE in a downlink RRC message. An application layer measurement report (also called QoE report) that the UE Access Stratum (UE AS) or UE RRC layer receives from the UE's higher layer (application layer) is encapsulated in a transparent container and sent to network in an uplink RRC message. The RAN then forwards the QoE report to a Measurement Collector Entity (MCE).

In 3GPP release 17, a new study item for "Study on NR QoE management and optimizations for diverse services" for NR has been approved and concluded. The specification work for 3GPP release 17 is still ongoing. The purpose of the study item is to study solutions for QoE measurements in NR. QoE management in NR will not just collect the quality of experience parameters of streaming services but also consider the typical performance requirements of diverse services (e.g., Augmented Reality (AR) / VR and Ultra-Reliable Low-Latency Communication (URLLC), of which at least VR seems to be covered in 3GPP release 17). Based on requirements of services, the NR study also included more adaptive QoE management schemes that enable network optimization to satisfy user experience for diverse services.

The configuration data related to QoE measurements (in standard specifications typically referred to as application layer measurements) consists of a service type indication, an indication of an area in which the measurements are to be performed (denoted *area scope*), an IP address of the entity to which the collected measurement results (i.e. the QoE reports) should be sent, which is often referred to as an MCE, spelled out as Measurement Collector Entity or Measurement Collection Entity, but the entity may sometimes also be referred to as a Trace Collection Entity, and a set of instructions of which type of measurements should be performed and details of how these measurements are to be performed. These instructions are intended for the application layer in the UE and are placed in a "container" which the network entities handling it, e.g. forwarding it to the UE, as well as the UE Access Stratum, cannot interpret and do not try to read. The currently specified service types are MTSI and streaming service (DASH), and in 3GPP release 17, at least service type VR will be added. An area scope is defined in terms of cells or network related areas. In UMTS, an area scope is defined as either a list of cells, a list of routing areas, or a list of tracking areas. In LTE, an area scope is defined as either a list of cells or a list of tracking areas. In NR, an area scope will be defined as either a list of cells or a list of tracking areas.

QoE, and in particular QoE configuration, comes in two flavors: management-based QoE configuration and signaling-based QoE configuration. In both cases, the QoE configuration originates in the OAM system or some other administrational entity, e.g. dealing with customer satisfaction. All of these entities are in this document referred to as the OAM system, where the OAM system also contains further entities. With management-based QoE (m-based QoE), the OAM system is typically interested in general QoE statistics from a certain area, which is configured as an area scope. The m-based QoE configuration is sent directly from the OAM system to the RAN nodes controlling cells that are within the area scope. Each RAN node then selects UEs that are within the area scope (and also fulfills any other relevant condition, such as supporting the concerned application/service type) and sends the m-based QoE configuration to these UEs.

With signaling-based QoE (s-based QoE), the OAM system is interested in collecting QoE measurement results from a specific UE, e.g., because the user of the UE has filed a complaint. The OAM system sends the s-based QoE configuration to the Home Subscriber Server (HSS) in the Evolved Packet System (EPS) / LTE or the Unified Data Management (UDM) in the 5^{th} Generation System (5GS) / NR, which forwards the QoE configuration to the UE's current core network node (CN), e.g., a Mobility Management Entity (MME) in EPS/LTE or an Access and Mobility Management Function (AMF) in 5G/NR. The CN then forwards the s-based QoE configuration to the RAN node that serves the concerned UE, and the RAN node forwards the s-based QoE configuration to the UE.

Forwarded to the UE are the service type indication and the container with the measurement instructions. The UE is not aware of whether a received QoE configuration is m-based or s-based. In legacy systems, the QoE framework is integrated with the Trace functionality and a Trace Identifier (ID) is associated with each QoE configuration. In NR, the QoE functionality will be logically separated from the Trace functionality, but it will still partly reuse the Trace signaling mechanisms. In NR and LTE, a globally unique QoE reference formed of Mobile Country Code (MCC) + Mobile Network Code (MNC) + QoE Measurement Collection (QMC) Identity (ID), where the QMC ID is a string of 24 bits, will be associated with each QoE configuration. The QoE reference is included in the container with measurement instructions and also sent to the RAN node (i.e., the next generation Node B (gNB) in NR or eNB in LTE). For the communication between the RAN node and the UE, the QoE reference is replaced by a shorter identifier denoted as *measConfigAppLayerId,* which is locally unique within a UE, i.e., there is a one-to-one mapping between a *measConfigAppLayerId* and a QoE reference for each QoE configuration provided to a UE. The *measConfigAppLayerId* is stored in the UE Access Stratum and also forwarded in an AT Command, which is the type of instructions used in the communication between the UE's modem part and the UE's application layer, together with the service type indication and the container with the measurement instructions.

Reports with collected QoE measurement results (QoE reports) are sent from the UE application layer to the UE Access Stratum, which forwards them to the RAN, which forwards them to the MCE. These QoE measurement results are placed in a "container", which is uninterpretable for the UE Access Stratum and the RAN. QoE reporting can be configured to be periodic or only sent at the end of an application session. Furthermore, the RAN can instruct the UE to pause QoE reporting, e.g., in case the cell/gNB is in a state of overload.

The RAN is not aware of when an application session with an associated QoE measurement session is ongoing, and the UE Access Stratum is also not automatically aware of this. To alleviate this, session start/stop indications can be introduced, which will be sent from the application layer in the UE to the UE AS and from the UE AS to the RAN. A session stop indication may be implicit in the form of a QoE report sent when the application session and the associated QoE measurement session are concluded.

The RAN may decide to release a QoE configuration in a UE at any time, as an implementation-based decision. Typically, it is done when the UE has moved outside an area configured for the QoE measurements, commonly referred to as the *area scope.*

One opportunity provided by legacy solutions is also to be able to keep the QoE measurement for the whole session, even during a handover situation. It is also discussed to let the UE continue with the QoE measurements on an ongoing application session until the application session ends, even if the UE in the meantime moves out of the configured area scope.

### 1.2RAN Visible QoE (RVQoE)

An extension of the QoE framework, which has been studied for 3GPP release 17 and which is currently being specified in 3GPP, is the concept of RAN visible QoE (RVQoE). The regular QoE reports are intended for the MCE, which is an entity outside the RAN, e.g., a part of the OAM system, and the RAN cannot read the QoE reports, at least not according to specification, although gNB/eNB implementations are not prevented from doing so. In contrast, reported RVQoE metrics are intended for the RAN and are delivered to the RAN in a format that the RAN understands. The RVQoE metrics are derived from the regular QoE metrics, collected, and compiled in reports by the UE application layer and delivered to the RAN, so that the RAN may use the reports for various types of optimizations. As an example, when the RAN receives RVQoE reports during an ongoing application session, the RAN can perform adaptive actions to impact the QoE of the concerned application session while the application session is ongoing, such as change various parameters related to the scheduling of the UE and the data flows related to the application session.

### 2 QoE Measurement in Legacy Systems

As discussed above, the measurements may be initiated towards RAN in a management-based manner, i.e. from an OAM node in a generic way, e.g. for a group of UEs, which may be selected by the RAN, or they may also be initiated in a signaling-based manner, i.e. initiated from CN (on request from the OAM system) to RAN e.g. for a single specific UE. The configuration of the measurement includes the measurement details, which is encapsulated in a container that is transparent to RAN.

When initiated via the core network, the measurement is started towards a specific UE. For the LTE case, the "TRACE START" S1AP message is used, which carries, among others, the details about the measurement configuration the application should collect (in the "Container for application layer measurement configuration" IE, transparent to the RAN) and the details to reach the trace collection entity to which the measurements should be sent.

Notifications of started and stopped application sessions with associated QoE measurement configurations are introduced, where these notifications are conveyed from the application layer in the UE and to the UE Access Stratum (i.e., the radio layers in the UE) and then forwarded to the network. This allows the network (at least the RAN) to be aware of when QoE measurements on an application session are ongoing. It is an implementation decision when the RAN stops the measurements. Typically, it is done when the UE has moved outside the configured area for measurement (also referred to as the area scope). However, this strategy is questioned by the desire to have QoE data that represent complete application sessions.

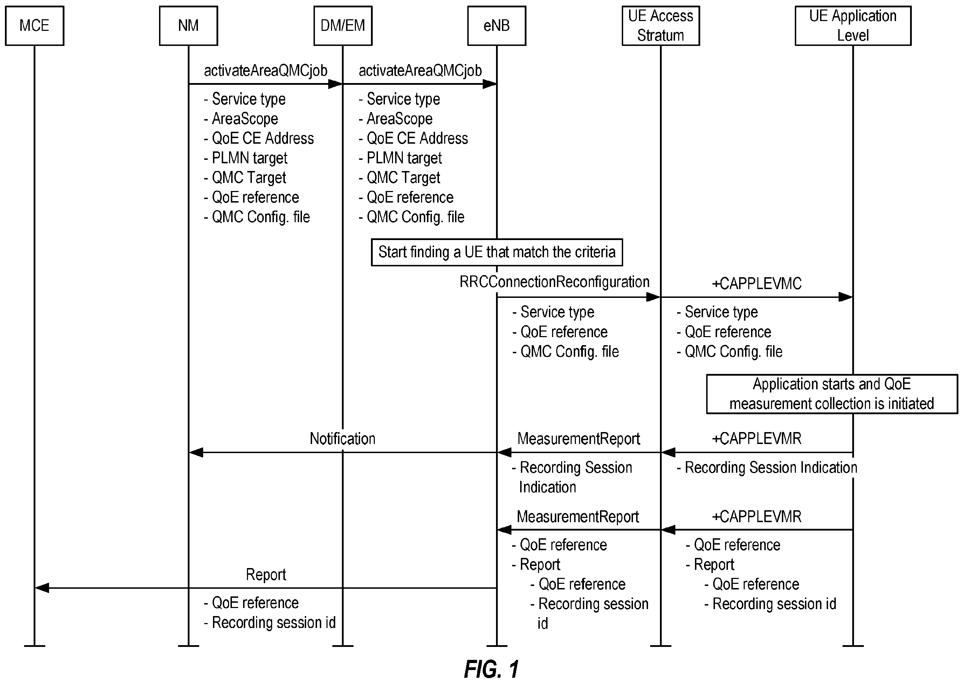

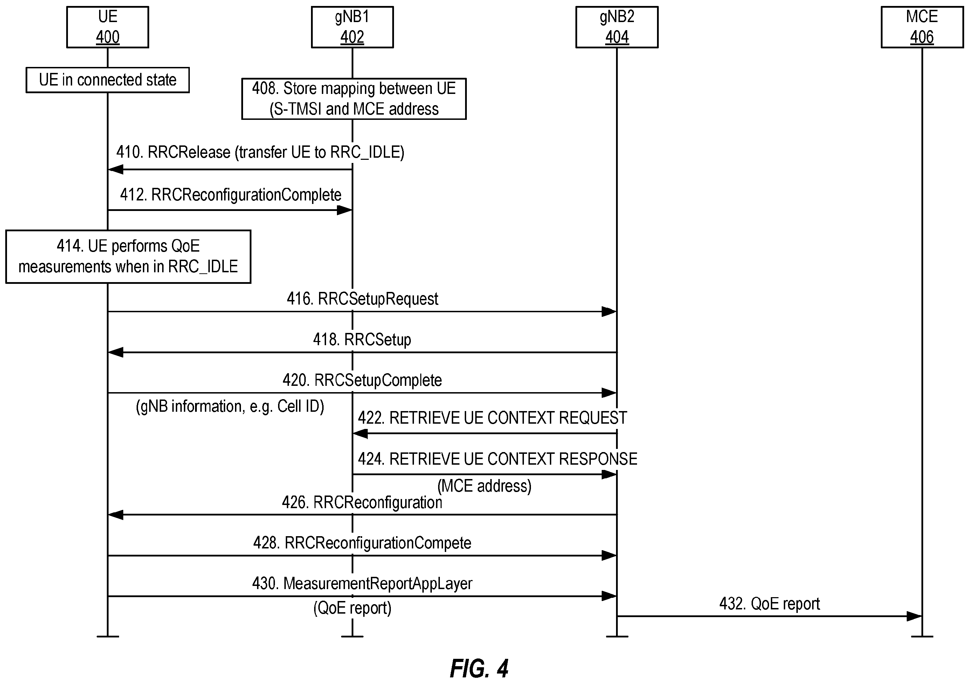

The signaling diagram in Figure 1 is a reproduction of Figure 4.2.1-1 ("QMC activation and reporting in LTE") from 3GPP Technical Specification (TS) 28.405 v16.0.0. It provides an overview, without showing all the details, of the signaling involved in QoE measurement configuration, from the OAM system to the UE.

One opportunity provided by legacy solution is also to be able to keep the QoE measurement for the whole application session, even during handover situation, so that reported QoE measurement data cover complete application sessions.

### 3 RRC Signaling

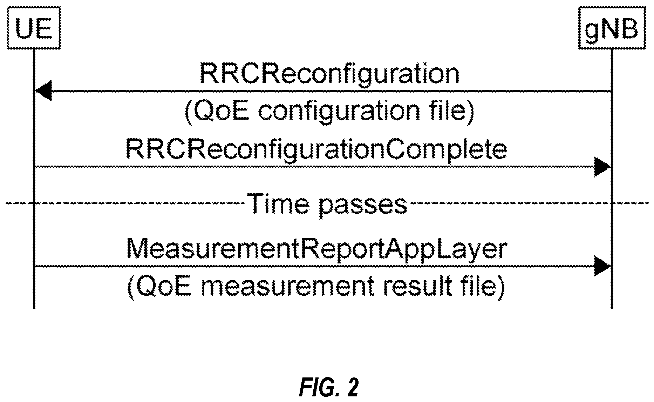

As illustrated in Figure 2, QoE measurements are configured in the UE by means of RRC signaling. The configuration is done using the RRC message *RRCReconfiguration* containing the Information Element (IE) *appLayerMeasConfig.* The UE starts collecting QoE measurements when the session starts in the application layer and, when a report is ready, it is sent to the network in the RRC message *MeasurementReportAppLayer.* The same RRC messages are used for both regular QoE and RVQoE.

### 4 AT Commands

AT commands are used for communication between the AS (radio) layer and the application layer in the UE. The AT commands are defined in 3GPP TS 27.007. The AT commands are used in QoE for transferring of the configuration from the RRC layer to the application and for transferring of reports from the application layer to the RRC layer.

### 5 RRC States

In 5G/NR, a UE may be in either of three different RRC states: RRC_CONNECTED state, RRC_INACTIVE state, or RRC_IDLE state. RRC_CONNECTED state is the state normally used when the UE is actively communicating. RRC_INACTIVE state and RRC_IDLE states are designed to allow the UE to save energy compared to when the UE is in RRC_CONNECTED state.

RRC_IDLE state is the state in which the UE consumes the least energy, When the UE is transferred to RRC_IDLE both the UE and the gNB delete the information related to the UE, a.k.a. the UE context, and the gNB thereby saves resources, but it comes at the cost of comparatively long network access time (e.g., transition to RRC_CONNECTED state).

RRC_INACTIVE state has properties that puts it in between the RRC_CONNECTED state and RRC_IDLE state. The purpose of the RRC_INACTIVE state is to reduce the signaling overhead over the radio and network interface and to improve the UE access latency (compared to RRC_IDLE state) as well as the UE energy consumption. In this state, the Core Network (CN) still regards the UE as connected, thus the CN-RAN connection for the UE is kept active although the RRC connection between the gNB and the UE is suspended. The gNB which maintains the connection to the CN while the UE is in RRC INACTIVE state is called the Anchor gNB. In order to reduce radio interface signaling at connection establishment, the UE context information is kept in the UE and in the Anchor gNB, which enables the UE to resume its RRC connection when it is paged or has UL data or signaling to send. When the CN has user data or control data to send to the UE, the data is sent to the Anchor gNB which then initiates paging of the UE (a.k.a. RAN initiated paging).

Document US 2022/217560 A1 shows methods of processing of QoE measurements in IDLE mode. The UE may transmit QoE measurement capabilities, associated with one or more types of services, to the BS and receives the corresponding QoE configuration information afterwards for subsequently performing the QoE measurement when in idle mode.

Document HUAWEI ET AL: "QoE measurement handling at RAN overload", 3GPP DRAFT; R2-2103911, 2 April 2021, is a 3GPP paper discussing QoE handling at RAN overload, including reporting pause and resume mechanism, as well as QoE measurement handling in RRC INACTIVE state, thereby mentioning that QoE measurement configuration for a UE can be fetched from the node hosting the UE context.

### Summary

The present invention defines a method performed by a User Equipment, UE, according to independent claim 1 and a corresponding UE, according to independent claim 11. Preferred embodiments are defined in the dependent claims.

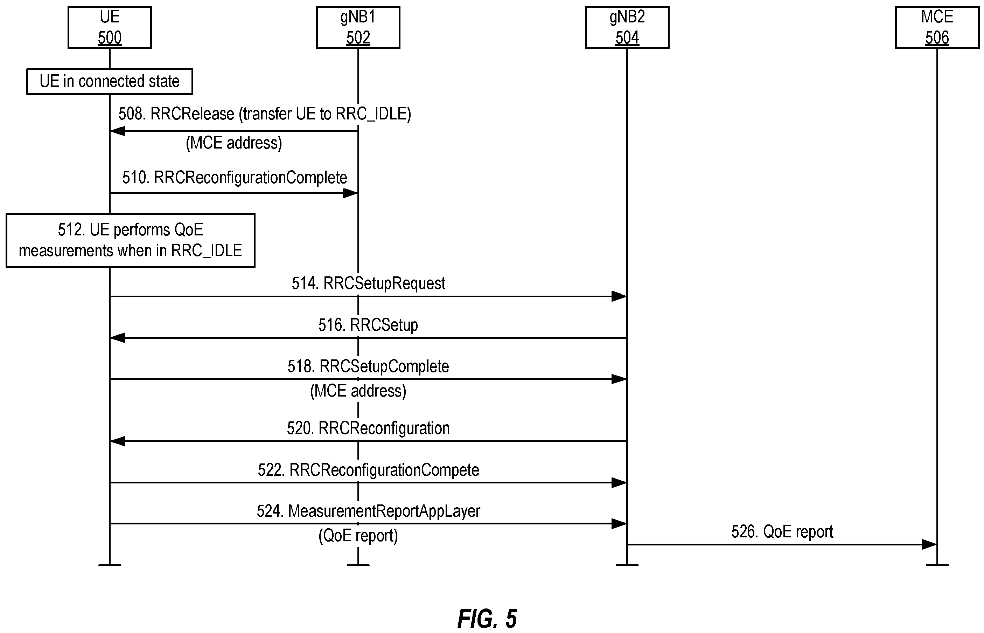

In the following the invention is best understood in view of figure 5 and the associated passages in the description. The remaining embodiments, aspects and examples disclosed below are included for illustrative purpose and for facilitating the understanding of the invention.

Systems and methods are disclosed that relate to storing of Quality of Experience (QoE) information or QoE configuration of a User Equipment (UE) while the UE is in an idle state. In some embodiments, QoE information or QoE configuration of a UE is stored by a network node while the UE is in the idle state and such stored information is utilized upon the UE transitioning back to the connected state. In this regard, in one embodiment, a method performed by a UE comprises receiving, from a first radio network node, a request for the UE to perform QoE measurements and/or Radio Access Network, RAN, Visible QoE (RVQoE) measurements when in idle state, receiving, from the first radio network node,, a request for the UE to transition to the idle state, and performing QoE measurements and/or RVQoE measurements while in the idle state, in accordance with the received request. The method further comprises transmitting, to a second radio network node, a request to transition from the idle state to a connected state, receiving, from the second radio network node, a request for the UE to transition from the idle state to the connected state, and transmitting, to the second radio network node, one or more QoE measurement reports and/or one or more RVQoE measurement reports comprising QoE measurements and/or RVQoE measurements, respectively, performed while the UE was in the idle state. Storing of the QoE information or QoE configuration for the UE in the network while the UE is in the idle state enables the UE to perform QoE and/or RVQoE measurements while in the idle state and to report those measurements upon transitioning back to the connected state.

In one embodiment, transmitting one or more QoE measurement reports and/or one or more RVQoE measurement reports comprises transmitting one or more RVQoE measurement reports comprising RVQoE measurements performed by the UE while in the idle state. In one embodiment, the method further comprises receiving, from the first radio network node an instruction to, when transmitting the RVQoE measurement reports collected while in the idle state to the second radio network node, also transmit information that indicates that the second radio network node is to forward the RVQoE measurement reports to the first radio network node. In one embodiment, the information that indicates that the second radio network node is to forward the RVQoE measurement reports to the first radio network node comprises one or more identifiers of the first radio network node. In one embodiment, the one or more identifiers of the first radio network node comprise an address of the first radio network node or an identifier of the first radio network node. In one embodiment, the method further comprises transmitting, to the second radio network node, an indication that the one or more RVQoE measurement reports are to be forwarded to the first radio network node.

In one embodiment, the method further comprises transmitting, to the second radio network node, an indication that the UE has a QoE report and/or an RVQoE report to transmit.

Corresponding embodiments of a UE are also disclosed. In one embodiment, a UE is adapted to receive, from a first radio network node, a request for the UE to perform QoE measurements and/or RVQoE measurements when in idle state, receive, from the first radio network node, a request for the UE to transition to the idle state, and perform QoE measurements and/or RVQoE measurements while in the idle state, in accordance with the received request. The UE is further adapted to transmit, to a second radio network node, a request to transition from the idle state to a connected state, receive, from the second radio network node, a request for the UE to transition from the idle state to the connected state, and transmit, to the second radio network node, one or more QoE measurement reports and/or one or more RVQoE measurement reports comprising QoE measurements and/or RVQoE measurements, respectively, performed while the UE was in the idle state.

In one embodiment, a UE comprises a communication interface and processing circuitry associated with the communication interface. The processing circuitry is configured to cause the UE to receive, from a first radio network node, a request for the UE to perform QoE measurements and/or RVQoE measurements when in idle state, receive, from the first radio network node, a request for the UE to transition to the idle state, and perform QoE measurements and/or RVQoE measurements while in the idle state, in accordance with the received request. The processing circuitry is further configured to cause the UE to transmit, to a second radio network node, a request to transition from the idle state to a connected state, receive, from the second radio network node, a request for the UE to transition from the idle state to the connected state, and transmit, to the second radio network node, one or more QoE measurement reports and/or one or more RVQoE measurement reports comprising QoE measurements and/or RVQoE measurements, respectively, performed while the UE was in the idle state.

Embodiments of a method performed by a first radio network node are also disclosed. In one embodiment, a method performed by a first radio network node comprises transmitting, to a core network node, a request for the core network node to store QoE information or QoE configuration related to a particular UE.

In one embodiment, the method further comprises transmitting, to the particular UE, a request to perform QoE measurements and/or RVQoE measurements when the particular UE is in idle state and transmitting, to the particular UE, a request for the particular UE to transition to the idle state.

In one embodiment, the method further comprises transmitting, to the particular UE, an indication that, in case the UE returns to connected state from the idle state under another radio network node, the UE is to, when transmitting to the another radio network node one or more RVQoE reports collected, at least partly, during the idle state, indicate to the another radio network node that the one or more RVQoE reports are to be forwarded to the first radio network node.

In one embodiment, the request transmitted to the core network node (306) comprises the QoE information or QoE configuration or the QoE information or QoE configuration is provided in association with the request.

In one embodiment, the QoE information or QoE configuration comprises a Measurement Collection Entity (MCE) address of an MCE to which QoE reports from the particular UE are to be forwarded.

In one embodiment, the QoE information or QoE configuration comprises an identifier to be used by another radio network node to forward one or more RVQoE reports from the UE after the UE returns to a connected state from the idle state.

In one embodiment, the request transmitted to the core network node comprises an indication of a timer value or is otherwise associated to a timer value that defines an amount of time that the core network node is to store the QoE information or QoE configuration related to the particular UE.

Corresponding embodiments of a first radio network node are also disclosed. In one embodiment, a first radio network node is adapted to transmit, to a core network node, a request for the core network node to store QoE information or QoE configuration related to a particular UE.

In one embodiment, a first radio network node comprises a communication interface and processing circuitry associated with the communication interface. The processing circuitry is configured to cause the first radio network node to transmit, to a core network node, a request for the core network node to store QoE information or QoE configuration related to a particular UE.

Embodiments of a method performed by a second radio network node are also disclosed. In one embodiment, a method performed by a second radio network node comprises receiving, from a UE, a request for the UE to transition from an idle state to a connected state, transmitting, to a core network node, a first message that comprises either: (a) a request for QoE information or QoE configuration related to the UE or (b) a request for an indication of whether QoE information or QoE configuration is available for the UE, and receiving, from the core network node, a second message comprising either: (i) the QoE information or QoE configuration related to the UE or (ii) an indication of whether QoE information or QoE configuration is available for the UE.

In one embodiment, the QoE information or QoE configuration comprises an MCE address of an MCE to which QoE reports from the particular UE are to be forwarded.

In one embodiment, the QoE information or QoE configuration comprises an identifier to be used by another radio network node to forward RVQoE report(s) from the UE after the UE returns to the connected state from the idle state.

In one embodiment, the request received from the UE comprises an indication that the UE has a QoE report and/or a RVQoE report to transmit.

In one embodiment, the first message transmitted to the core network node comprises the request for the QoE information or QoE configuration related to the UE, and the second message received from the core network node comprises the QoE information or QoE configuration related to the UE. In one embodiment, the method further comprises transmitting, to the UE, a request for the UE to transition the connected state, receiving a response from the UE, transmitting, to the UE, a configuration message comprising a UE configuration for the UE, receiving, from the UE, one or more QoE reports, and forwarding the one or more QoE reports in accordance with the QoE information or QoE configuration for the UE. In one embodiment, either the request received from the UE or the response received from the UE comprises an indication that the UE has a QoE report and/or a RVQoE report to transmit.

In one embodiment, the first message transmitted to the core network node comprises the request for an indication of whether QoE information or QoE configuration related to the particular UE is available, and the second message received from the core network node comprises the indication that QoE information or QoE configuration related to the particular UE is available. In one embodiment, the method further comprises transmitting, to the particular UE, a request for the particular UE to transition to the connected state, receiving a response from the particular UE, and transmitting, to the core network node, a third message comprising a request for the QoE information for the UE. In one embodiment, the method further comprises receiving, from the core network node, a fourth message comprising the QoE information or QoE configuration for the particular UE in response to the request comprised in the third message. In one embodiment, the method further comprises receiving, from the UE, one or more QoE reports and/or one or more RVQoE reports and forwarding the one or more QoE reports and/or the one or more RVQoE reports in accordance with the QoE information or QoE configuration for the particular UE.

Corresponding embodiments of a second radio network node are also disclosed. In one embodiment, a second radio network node is adapted to receive, from a UE, a request for the UE to transition from an idle state to a connected state, transmit, to a core network node, a first message that comprises either: (a) a request for QoE information or QoE configuration related to the UE or (b) a request for an indication of whether QoE information or QoE configuration is available for the UE, and receive, from the core network node, a second message comprising either: (i) the QoE information or QoE configuration related to the UE or (ii) an indication of whether QoE information or QoE configuration is available for the UE.

In one embodiment, a second radio network node comprises a communication interface and processing circuitry associated with the communication interface. The processing circuitry is configured to cause the second radio network node to receive, from a UE, a request for the UE to transition from an idle state to a connected state, transmit, to a core network node, a first message that comprises either: (a) a request for QoE information or QoE configuration related to the UE or (b) a request for an indication of whether QoE information or QoE configuration is available for the UE, and receive, from the core network node, a second message comprising either: (i) the QoE information or QoE configuration related to the UE or (ii) an indication of whether QoE information or QoE configuration is available for the UE.

Embodiments of a method performed by a core network node are also disclosed. In one embodiment, a method performed by a core network node comprises receiving, from a first radio network node, a request for the core network node to store QoE information or QoE configuration related to a particular UE and storing the QoE information or QoE configuration related to the particular UE.

In one embodiment, the request comprises the QoE information or QoE configuration or the QoE information or QoE configuration is received in association with the request.

In one embodiment, the QoE information or QoE configuration comprises an MCE address of an MCE to which QoE reports from the particular UE are to be forwarded.

In one embodiment, the QoE information or QoE configuration comprises an identifier to be used by another radio network node to forward RVQoE report(s) from the UE after the UE returns to RRC_CONNECTED from RRC_IDLE.

In one embodiment, the request further comprises an indication of a timer value or is otherwise associated to a timer value that defines an amount of time that the core network node is to store the QoE information or QoE configuration related to the particular UE.

In one embodiment, the method further comprises receiving, from a second radio network node, a first message that comprises either: (a) a request for QoE information or QoE configuration related to the particular UE or (b) a request for an indication of whether QoE information or QoE configuration is available for the particular UE, and transmitting, to the second radio network node, a second message comprising either: (i) the QoE information or QoE configuration related to the particular UE or (ii) an indication of whether QoE information or QoE configuration is available for the particular UE.

Corresponding embodiments of a core network node are also disclosed. In one embodiment, a core network node is adapted to receive, from a first radio network node, a request for the core network node to store QoE information or QoE configuration related to a particular UE and store the QoE information or QoE configuration related to the particular UE.

In one embodiment, a core network node comprises a communication interface and processing circuitry associated with the communication interface. The processing circuitry configured to cause the core network node to receive, from a first radio network node, a request for the core network node to store QoE information or QoE configuration related to a particular UE and store the QoE information or QoE configuration related to the particular UE.

In some embodiments, QoE information or QoE configuration of a UE is stored by the UE on behalf of the network while the UE is in the idle state and such stored information is utilized upon the UE transitioning back to the connected state. In this regard, in one embodiment, a method performed by a UE for a radio network comprises receiving, from a first radio network node, a request for the UE to perform QoE measurements and/or RVQoE measurements when in an idle state, receiving, from the first radio network node, a request for the UE to transition to the idle state, receiving QoE information or QoE configuration for the UE to be stored on behalf of the radio network, storing the QoE information for the UE on behalf of the radio network, and performing QoE measurements and/or RVQoE measurements while in the idle state, in accordance with the received request. The method further comprises transmitting, to a second radio network node, a request to transition from the idle state to a connected state, receiving, from the second radio network node, a request for the UE to transition from the idle state to the connected state, transmitting, to the second radio network node, the QoE information or QoE configuration for the UE stored by the UE on behalf of the radio network, and transmitting, to the second radio network node, one or more QoE measurement reports and/or one or more RVQoE measurement reports comprising QoE measurements and/or RVQoE measurements, respectively, performed while the UE was in the idle state. Storing of the QoE information or QoE configuration for the UE at the UE on behalf of the network while the UE is in the idle state enables the UE to perform QoE and/or RVQoE measurements while in the idle state and to report those measurements upon transitioning back to the connected state.

In one embodiment, the QoE information or QoE configuration comprises an MCE address of an MCE to which QoE reports from the UE are to be forwarded.

In one embodiment, the QoE information or QoE configuration comprises an identifier to be used by another radio network node to forward RVQoE report(s) from the UE after the UE returns to the connected state from the idle state.

In one embodiment, the method further comprises receiving a timer value that defines an amount of time that the UE is to store the QoE information or QoE configuration.

In one embodiment, transmitting one or more QoE measurement reports and/or one or more RVQoE measurement reports comprises transmitting one or more RVQoE measurement reports comprising RVQoE measurements performed by the UE while in the idle state. In one embodiment, the method further comprises receiving, from the first radio network node an instruction to, when transmitting the RVQoE measurement reports collected while in the idle state to the second radio network node, also transmit information that indicates that the second radio network node is to forward the RVQoE measurement reports to the first radio network node. In one embodiment, the information that indicates that the second radio network node is to forward the RVQoE measurement reports to the first radio network node comprises one or more identifiers of the first radio network node. In one embodiment, the one or more identifiers of the first radio network node comprise an address of the first radio network node or an identifier of the first radio network node.

In one embodiment, the method further comprises transmitting, to the second radio network node, an indication that indicates that the one or more RVQoE measurement reports are to be forwarded to the first radio network node.

In one embodiment, the method further comprises transmitting, to the second radio network node, an indication that the UE has a QoE report and/or an RVQoE report to transmit.

Corresponding embodiments of a UE are also disclosed. In one embodiment, a UE for a radio network is adapted to receive, from a first radio network node, a request for the UE to perform QoE measurements and/or RVQoE measurements when in an idle state, receive, from the first radio network node, a request for the UE to transition to the idle state, receive QoE information or QoE configuration for the UE to be stored on behalf of the radio network, store the QoE information for the UE on behalf of the radio network, and perform QoE measurements and/or RVQoE measurements while in the idle state, in accordance with the received request. The UE is further adapted to transmit, to a second radio network node, a request to transition from the idle state to a connected state, receiving, from the second radio network node, a request for the UE to transition from the idle state to the connected state, transmit, to the second radio network node, the QoE information or QoE configuration for the UE stored by the UE on behalf of the radio network, and transmit, to the second radio network node, one or more QoE measurement reports and/or one or more RVQoE measurement reports comprising QoE measurements and/or RVQoE measurements, respectively, performed while the UE was in the idle state.

In one embodiment, a UE for a radio network comprises a communication interface and processing circuitry associated with the communication interface. The processing circuitry is configured to cause the UE to receive, from a first radio network node, a request for the UE to perform QoE measurements and/or RVQoE measurements when in an idle state, receive, from the first radio network node, a request for the UE to transition to the idle state, receive QoE information or QoE configuration for the UE to be stored on behalf of the radio network, store the QoE information for the UE on behalf of the radio network, and perform QoE measurements and/or RVQoE measurements while in the idle state, in accordance with the received request. The processing circuitry is further configured to cause the UE to transmit, to a second radio network node, a request to transition from the idle state to a connected state, receiving, from the second radio network node, a request for the UE to transition from the idle state to the connected state, transmit, to the second radio network node, the QoE information or QoE configuration for the UE stored by the UE on behalf of the radio network, and transmit, to the second radio network node, one or more QoE measurement reports and/or one or more RVQoE measurement reports comprising QoE measurements and/or RVQoE measurements, respectively, performed while the UE was in the idle state.

Embodiments of a method performed by a first radio network node are also disclosed. In one embodiment, a method performed by a first radio network node of a radio network comprises transmitting, to a UE, a request for the UE to perform QoE measurements and/or RVQoE measurements when in an idle state, transmitting, to the UE, a request for the UE to transition to the idle state, and transmitting, to the UE, QoE information or QoE configuration for the UE on behalf of the radio network.

In one embodiment, the QoE information or QoE configuration comprises an MCE address of an MCE to which QoE reports from the UE are to be forwarded.

In one embodiment, the QoE information or QoE configuration comprises an identifier to be used by another radio network node to forward RVQoE report(s) from the UE after the UE returns to a connected state from the idle state.

In one embodiment, the method further comprises transmitting, to the UE, a timer value that defines an amount of time that the UE is to store the QoE information or QoE configuration.

Corresponding embodiments of a first radio network node are also disclosed. In one embodiment, a first radio network node for a radio network is adapted to transmit, to a UE, a request for the UE to perform QoE measurements and/or RVQoE measurements when in an idle state, transmit, to the UE, a request for the UE to transition to the idle state, and transmit, to the UE, QoE information or QoE configuration for the UE to be stored by the UE on behalf of the radio network.

In one embodiment, a first radio network node for a radio network comprises a communication interface and processing circuitry associated with the communication interface. The processing circuitry is configured to cause the first radio network node to transmit, to a UE, a request for the UE to perform QoE measurements and/or RVQoE measurements when in an idle state, transmit, to the UE, a request for the UE to transition to the idle state, and transmit, to the UE, QoE information or QoE configuration for the UE to be stored by the UE on behalf of the radio network.

Embodiments of a method performed by a second radio network node are also disclosed. In one embodiment, a method performed by a second radio network node for a radio network comprises receiving, from a UE, a request to transition from an idle state to a connected state, transmitting, to the UE, a request for the UE to transition to from the idle state to the connected state, and receiving, from the UE, QoE information or QoE configuration for the UE that is stored by the UE on behalf of the radio network. The method further comprises receiving, from the UE, one or more QoE measurement reports and/or one or more RVQoE measurement reports comprising QoE measurements and/or RVQoE measurements, respectively, performed while the UE was in the idle state and forwarding the one or more QoE measurement reports and/or the one or more RVQoE measurement reports in accordance with the QoE information or QoE configuration for the UE.

In one embodiment, the QoE information or QoE configuration comprises an MCE address of an MCE to which QoE reports from the UE are to be forwarded.

In one embodiment, the QoE information or QoE configuration comprises an identifier to be used by the second radio network node to forward RVQoE report(s) from the UE after the UE returns to the connected state from the idle state.

Corresponding embodiments of a second radio network node are also disclosed. In one embodiment, a second radio network node for a radio network is adapted to receive, from a UE, a request to transition from an idle state to a connected state, transmit, to the UE, a request for the UE to transition to from the idle state to the connected state, and receive, from the UE, QoE information or QoE configuration for the UE that is stored by the UE on behalf of the radio network. The UE is further adapted to receive, from the UE, one or more QoE measurement reports and/or one or more RVQoE measurement reports comprising QoE measurements and/or RVQoE measurements, respectively, performed while the UE was in the idle state and forward the one or more QoE measurement reports and/or the one or more RVQoE measurement reports in accordance with the QoE information or QoE configuration for the UE.

In one embodiment, a second radio network node for a radio network comprises a communication interface and processing circuitry associated with the communication interface. The processing circuitry is configured to cause the second radio network node to receive, from a UE, a request to transition from an idle state to a connected state, transmit, to the UE, a request for the UE to transition to from the idle state to the connected state, and receive, from the UE, QoE information or QoE configuration for the UE that is stored by the UE on behalf of the radio network. The processing circuitry is further configured to cause the second radio network node to receive, from the UE, one or more QoE measurement reports and/or one or more RVQoE measurement reports comprising QoE measurements and/or RVQoE measurements, respectively, performed while the UE was in the idle state and forward the one or more QoE measurement reports and/or the one or more RVQoE measurement reports in accordance with the QoE information or QoE configuration for the UE.

In some embodiments, QoE information or QoE configuration of a UE is stored in the radio network, or radio access network, while the UE is in the idle state and such stored information is utilized upon the UE transitioning back to the connected state. In this regard, in one embodiment, a method performed by a first radio network node comprises storing QoE information or QoE configuration related to a UE, transmitting, to the UE, a request for the UE to perform QoE measurements and/or RVQoE measurements when in an idle state, and transmitting, to the UE, a request for the UE to transition to the idle state. The method further comprises receiving, from a second radio network node, a request for the QoE information for the UE and, in response thereto, transmitting the QoE information or QoE configuration for the UE to the second radio network node. Storing of the QoE information or QoE configuration for the UE in the first radio network node while the UE is in the idle state enables the UE to perform QoE and/or RVQoE measurements while in the idle state and to report those measurements upon transitioning back to the connected state.

In one embodiment, the steps of receiving the request for the QoE information or QoE configuration for the UE and transmitting the QoE information or QoE configuration for the UE to the second radio network node are performed in association of a return of the particular UE to a connected state from the idle state.

In one embodiment, the QoE information or QoE configuration comprises an MCE address of an MCE to which QoE reports from the particular UE are to be forwarded.

In one embodiment, the QoE information or QoE configuration comprises an identifier to be used by another radio network node to forward RVQoE report(s) from the UE after the UE returns to the connected state from the idle state.

Corresponding embodiments of a first radio network node are also disclosed. In one embodiment, a first radio network node is adapted to store QoE information or QoE configuration related to a UE, transmit, to the UE, a request for the UE to perform QoE measurements and/or RVQoE measurements when in an idle state, and transmit, to the UE, a request for the UE to transition to the idle state. The first radio network node is further adapted to receive, from a second radio network node, a request for the QoE information or QoE configuration for the UE and, in response thereto, transmit the QoE information or QoE configuration for the UE to the second radio network node.

In one embodiment, a first radio network node comprises a communication interface and processing circuitry associated with the communication interface. The processing circuitry is configured to cause the first radio network node to store QoE information or QoE configuration related to a UE, transmit, to the UE, a request for the UE to perform QoE measurements and/or RVQoE measurements when in an idle state, and transmit, to the UE, a request for the UE to transition to the idle state. The processing circuitry is further configured to cause the first radio network node to receive, from a second radio network node, a request for the QoE information or QoE configuration for the UE and, in response thereto, transmit the QoE information or QoE configuration for the UE to the second radio network node.

Embodiments of a method performed by a second radio network node are also disclosed. In one embodiment, a method performed by a second radio network node comprises receiving, from a UE, a request to transition to a connected state and transmitting, to the UE, a request for the UE to transition to the connected state. The method further comprises transmitting, to a first radio network node, a request for QoE information or QoE configuration for the UE and receiving, from the first radio network node, the QoE information or QoE configuration for the UE. The method further comprises receiving one or more QoE measurement reports and/or one or more RVQoE measurement reports comprising QoE measurements and/or RVQoE measurements, respectively, performed by the UE while in an idle state and forwarding the one or more QoE measurement reports and/or the one or more RVQoE measurement reports in accordance with the QoE information or QoE configuration for the UE.

In one embodiment, the QoE information or QoE configuration comprises an MCE address of an MCE to which QoE reports from the UE are to be forwarded.

In one embodiment, the QoE information or QoE configuration comprises an identifier to be used by another radio network node to forward RVQoE report(s) from the UE after the UE returns to the connected state from the idle state.

Corresponding embodiments of a second radio network node are also disclosed. In one embodiment, a second radio network node is adapted to receive, from a UE, a request to transition to a connected state and transmit, to the UE, a request for the UE to transition to the connected state. The second radio network node is further adapted to transmit, to a first radio network node, a request for QoE information or QoE configuration for the UE and receive, from the first radio network node, the QoE information or QoE configuration for the UE. The second radio network node is further adapted to receive one or more QoE measurement reports and/or one or more RVQoE measurement reports comprising QoE measurements and/or RVQoE measurements, respectively, performed by the UE while in an idle state and forward the one or more QoE measurement reports and/or the one or more RVQoE measurement reports in accordance with the QoE information or QoE configuration for the UE.

In one embodiment, a second radio network node comprises a communication interface and processing circuitry associated with the communication interface. The processing circuitry is configured to cause the second radio network node to receive, from a UE, a request to transition to a connected state and transmit, to the UE, a request for the UE to transition to the connected state. The processing circuitry is further configured to cause the second radio network node to transmit, to a first radio network node, a request for QoE information or QoE configuration for the UE and receive, from the first radio network node, the QoE information or QoE configuration for the UE. The processing circuitry is further configured to cause the second radio network node to receive one or more QoE measurement reports and/or one or more RVQoE measurement reports comprising QoE measurements and/or RVQoE measurements, respectively, performed by the UE while in an idle state and forward the one or more QoE measurement reports and/or the one or more RVQoE measurement reports in accordance with the QoE information or QoE configuration for the UE.

### Brief Description of the Drawings

The accompanying drawing figures incorporated in and forming a part of this specification illustrate several aspects of the disclosure, and together with the description serve to explain the principles of the disclosure.
Figure 1 is a reproduction of Figure 4.2.1-1 ("QMC activation and reporting in LTE") from 3^{rd} Generation Partnership Project (3GPP) Technical Specification (TS) 28.405 v16.0.0;
Figure 2 illustrates a procedure in which Quality of Experience (QoE) measurements are configured in the User Equipment (UE) by means of Radio Resource Control (RRC) signaling;
Figure 3 illustrates the operation of a UE, a first Radio Network (RN) node (gNB1 in the illustrated example), a second RN node (gNB2 in the illustrated example), a core network node (Access and Mobility Management Function (AMF) in the illustrated example), and a Measurement Collection Entity (MCE).
Figure 4 illustrates the operation of a UE, a first RN node (gNB1 in the illustrated example), a second RN node (gNB2 in the illustrated example), and an MCE.
Figure 5 illustrates the operation of a UE, a first RN node (gNB1 in the illustrated example), a second RN node (gNB2 in the illustrated example), and an MCE, in accordance with one embodiment of the present invention disclosed herein;
Figure 6 shows an example of a communication system in accordance with some embodiments;
Figure 7 shows a UE in accordance with some embodiments;
Figure 8 shows a network node in accordance with some embodiments;
Figure 9 is a block diagram of a host, which may be an embodiment of the host of Figure 6, in accordance with various aspects described herein;
Figure 10 is a block diagram illustrating a virtualization environment in which functions implemented by some embodiments may be virtualized; and
Figure 11 shows a communication diagram of a host communicating via a network node with a UE over a partially wireless connection in accordance with some embodiments.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

There currently exist certain challenge(s). In 3^{rd} Generation Partnership Project (3GPP) Release 17, Quality of Experience (QoE) measurements are done when the User Equipment (UE) is in Radio Resource Control (RRC) connected state (RRC_CONNECTED). In the Release 18 work item for QoE, the UE will be able to perform QoE measurements also when in RRC inactive state (RRC_INACTIVE) and RRC idle (RRC_IDLE). A problem with the UE performing measurements when in RRC_IDLE is that the next generation Node B (gNB) deletes the UE context (i.e., information associated with the UE) when the UE is transferred to RRC_IDLE. That means that the gNB deletes the QoE configuration including the information about the Measurement Collection Entity (MCE) address, i.e., the address to which the QoE reports should be forwarded when the measurements have been done and the UE transmits a report. If QoE measurements are done in RRC_IDLE, there is currently no possibility for the gNB to have any QoE configuration information available when the UE returns to RRC_CONNECTED state from RRC_IDLE, such as, e.g., the information about where to forward QoE reports from the UE.

Certain aspects of the disclosure and their embodiments may provide solutions to these or other challenges. Systems and methods are disclosed herein for storing QoE measurement configurations when a UE is in RRC_IDLE. Embodiments of the systems and methods disclosed herein provide different options for how to make QoE configuration information, e.g., the MCE address, available to a serving network node (e.g., a serving gNB) when a UE returns from RRC_IDLE and when QoE measurements have been performed in RRC_IDLE. Different options disclosed herein include, e.g.:
- Storing QoE information (e.g., QoE configuration information including, e.g., the MCE address) in the **core network** while the UE is in RRC_IDLE.
- Storing QoE information (e.g., QoE configuration information including, e.g., the MCE address) in a **radio network node (e.g., in the gNB)** while the UE is in RRC_IDLE.
- Storing QoE information (e.g., QoE configuration information including, e.g., the MCE address) in the **UE** while the UE is in RRC_IDLE.

When the UE returns from RRC_IDLE to RRC_CONNECTED, the QoE information is retrieved by the serving radio network node (e.g., the serving gNB).

Certain conditions can be used to determine when storing of QoE information is used, whether storing occurs at network side (Core Network (CN) or Radio Access Network (RAN) side) or at the UE side, and for how long.

Certain embodiments may provide one or more of the following technical advantage(s). For example, embodiments of the systems and methods disclosed herein may enable a serving network node (e.g., a serving gNB) of a UE to access information of a QoE configuration when the UE returns from RRC_IDLE to RRC_CONNECTED and transmits a QoE report. Embodiments disclosed herein may also enable the QoE measurements to proceed while the UE is in the RRC_IDLE, the support of which is stipulated by the 3GPP Release 18 work item description for the Multicast and Broadcast Service (MBS). The serving network node (e.g., serving gNB) can then retrieve the information of where to forward the QoE report and also possibly retrieve other QoE information for the specific UE.

### 2.1 Terminology and Generalizations

Disclaimers:
- The terms "UE", "terminal equipment" and "wireless terminal" are used interchangeably.
- The terms MCE and Trace Collection Entity (TCE) are used interchangeably.
- The terms "network node" and "RAN node" are used interchangeably, where the RAN node can be a gNB, evolved Node B (eNB), gNB Central Unit (CU) (i.e., gNB-CU), gNB-CU Control Plane (gNB-CU-CP), eNB-CU, eNB-CU Control Plane (eNB-CU-CP), Integrated Access and Backhaul (IAB)-donor, IAB-donor-CU, IAB-donor-CU Control Plane (IAB-donor-CU-CP).
- The terms "application layer measurement configuration", "application measurement configuration", "QoE measurement configuration", "QoE information", "QoE configuration", and "QoE measurement and reporting configuration" are used interchangeably.
- The terms "modem", "radio layer", "AS layer", "RRC layer" and "radio network layer" are used interchangeably.
- The terms "access stratum" and "radio layer" are used interchangeably.
- The terms "service subtype" and "subservice type" area used interchangeably.
- The term "session" is used frequently herein and it may refer to either a QoE measurement session or an application session or an application session for which QoE measurements are applied.
- The solution proposed in the present disclosure applies to Universal Mobile Telecommunications Service (UMTS), Long Term Evolution (LTE), and NR as well as future Radio Access Technologies (RATs) such as 6^{th} Generation (6G).
- All references to the application layer are with respect to the application layer of the UE (since RAN nodes do not have an application layer).
- The solution proposed in the present disclosure applies to both signaling- and management-based QoE measurements.
- The solution proposed in the present disclosure applies to both QoE and RAN Visible QoE (RVQoE).
- The solution is primarily described in 5G/NR terms, implying application of the solution in 5G/NR, but the solution is also applicable in LTE (in which case for instance a gNB would be replaced by an eNB, and an *RRCReconfiguration* message would be replaced by an *RRCConnectionReconfiguration* message).
- The application layer described in the present disclosure may instead be some other higher layer in the UE or the QoE coordinator entity.
- The embodiments are described on an example of a single UE, but the actions therein may equally apply to more than UE simultaneously.
- The terms "Radio Network node" and "RN node" are used interchangeably
- The term "application layer capability" may refer to one or more of the following (nonlimiting examples):
   ∘ Support or subscription for running an application.
   ∘ Certain applications downloaded in the UE.

### 2.2 Storing QoE Information in the Core Network

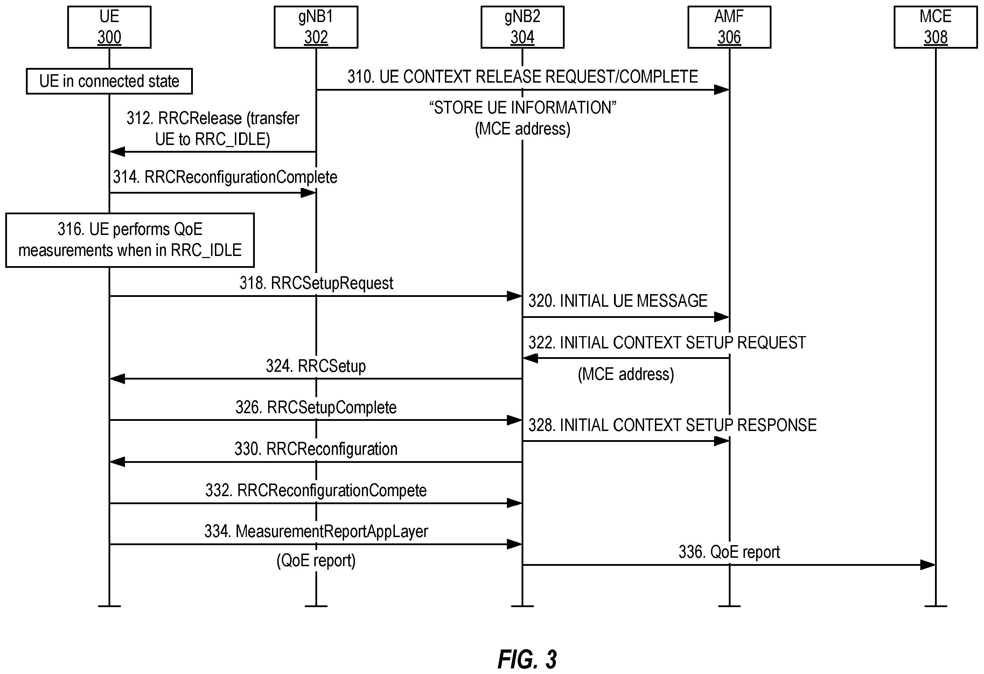

Figure 3 illustrates the operation of a UE 300, a first RN node (gNB1 in the illustrated example) 302, a second RN node (gNB2 in the illustrated example) 304, a core network node (AMF in the illustrated example) 306, and an MCE 308. The QoE information is stored in the core network node 306, e.g., the AMF in the example of Figure 3, while the UE 300 is in RRC_IDLE. The information is retrieved, by the second RN node 304 in the example of Figure 3, from the core network node 306 when the UE 300 returns from RRC_IDLE to RRC_CONNECTED.

The solution comprises methods executed by, respectively, the first RN node 302, the second RN node 304, the UE 300, and the core network node 306, each of which are described in the subsections below with reference to Figure 3 as an example.

### 2.2.1 Methods Executed by a First Radio Network Node and a Second Radio Network Node

The present disclosure comprises a method **executed by a first RN Node (e.g., the first RN node 302),** the method comprising:
- Transmitting, **to a core network (CN) node,** a message comprising a **request to store QoE information or QoE configuration** related to a certain UE (e.g., UE 300) (see, e.g., step 310 of Figure 3).
   ∘ The request may contain the MCE address, to which the QoE reports should be forwarded. Also, other QoE information may be included.
   ∘ In case the first RN node wishes to receive one or more RVQoE report(s) collected (at least partly) during RRC_IDLE, even if the UE returns from RRC_IDLE to RRC_CONNECTED under an RN node different than the first (say second Radio Network node), the first RN node indicates such a need to the CN. This may, for example, be the first RVQoE report sent by the UE after the return to the RRC_CONNECTED. The first RN node also indicates to the CN node the identifier(s) (e.g., an address) that the second RN node will use to forward the RVQoE report received after the UE returns to RRC_CONNECTED.
   ∘ The request could, e.g., be included in an NGAP message such as UE CONTEXT RELEASE REQUEST, UE CONTEXT RELEASE COMPLETE, another existing message or a new message.
   ∘ As one option, the message is transmitted to the core network node when the first radio network node has received the QoE configuration, e.g. from the OAM system.
   ∘ As another option, the message is transmitted to the core network node when the first radio network node has transmitted the QoE configuration to the UE, e.g. in the subsequent step.
   ∘ As yet another option, the message is transmitted to the core network node when the first radio network node has released the UE to RRC_IDLE state or when the radio network node is about to release the UE to RRC_IDLE state, e.g. when the message transmitted to the core network node is a UE CONTEXT RELEASE REQUEST NGAP message or a UE CONTEXT RELEASE COMPLETE NGAP message.
   ∘ The request may contain the indication of timer (e.g., *Timer_for_QoE_storage_RRC_IDLE*) to be used for maintaining the stored information. The core network is supposed to, or is allowed to, delete the stored information when the timer expires, the timer starting, e.g., at reception of the request.
- Transmitting, **to a UE, a request to perform QoE measurements** and/or RAN visible QoE measurements when **in RRC_IDLE** (see, e.g., step 312 of Figure 3);
   o This request may be:
      ▪ transmitted at any time, at an earlier stage (e.g., when QoE measurements are configured for the UE, or upon a mobility event preceding the request to the UE to transfer to RRC_IDLE), or
      ▪ transmitted together with the request to the UE to transfer to RRC_IDLE, e.g. an *RRCRelease* message;
   o The following may be included here or in the next step, i.e., when transmitting to the UE a request to transfer to RRC_IDLE: The request to perform QoE and/or RVQoE measurements in RRC_IDLE may also contain an indication to the UE that, in case the UE returns to RRC_CONNECTED under another RN node (say second RN node), the UE should, when sending to the second RN node one or more RVQoE reports collected (at least partly) during RRC_IDLE to the second RN node, indicate to the second RN node that the said RVQoE report(s) are to be forwarded to the first RN node. One or more identifier(s) of the first RN node may also be included in the request, e.g., gNB ID, address etc.
   o This step of transmitting this request to a UE may optionally be performed before the preceding step of transmitting a request to a core network node to store QoE information or QoE configuration related to a certain UE.
- Transmitting, **to the UE, a request to transfer to RRC_IDLE** (see, e.g., step 312 of Figure 3);
   o In one variant, the solution applies only if the request is for transitioning the UE from RRC_CONNECTED to RRC_IDLE;
   o in another variant, the solution applies only if the request is for transitioning the UE from RRC_INACTIVE to RRC_IDLE
   o in another variant, the solution applies only if the request to transfer to RRC_IDLE does not include a redirection to a carrier belonging to a different RAT
   o in another variant, the solution applies only if the request to transfer to RRC_IDLE does not include a redirection to a different CN type

The present disclosure comprises a method **executed by a second RN Node** (which may be a different Radio Network Node or the same Radio Network Node as the first RN Node) (e.g., the second RN node 304 in the example of Figure 3), the method comprising:
- **Receiving,** from a UE, a request to transit from RRC_IDLE to RRC_CONNECTED, e.g. in an *RRCSetupRequest* message (see, e.g., step 318 of Figure 3);
   o The request may contain an indication that the UE has a QoE report and/or RAN visible QoE report to transmit. The request may, e.g., also be included in *RRCSetupComplete* or *RRCReconfigurationComplete.*
   ∘ In case of network initiated RRC setup, this message is not transmitted.
- Transmitting, to the core network, i.e. to a core network node, e.g. an AMF, an INITIAL UE MESSAGE NGAP message (see, e.g., step 320 of Figure 3);
   o The INITIAL UE MESSAGE NGAP message may include a request to send QoE information or QoE configuration related to the UE, or a request for an indication of whether QoE information or QoE configuration related to the UE is available in the UE.
      ▪ That is, the request for QoE information or the request for an indication of whether QoE information is available for the UE may be explicit or implicit.
      ▪ Alternatively, the request for QoE information or the request for an indication of whether QoE information is available for the UE, may be included in the INITIAL CONTEXT SETUP RESPONSE NGAP message. As one option, the second radio network node transmits the request
- **Receiving from the core** network node an **INITIAL CONTEXT SETUP REQUEST NGAP message** (see, e.g., step 322 of Figure 3).
   ∘ If explicitly or implicitly requested in the INITIAL UE MESSAGE NGAP message, and if available at the core network node, the INITIAL CONTEXT SETUP REQUEST NGAP message includes QoE information or QoE configuration related to the UE.
      ▪ Optionally, the message may also contain an indication that one or more RVQoE reports received from the UE collected during RRC_IDLE are to be forwarded to the first RN node.
   ∘ If the INITIAL UE MESSAGE NGAP message contained a request for an indication of whether QoE information or QoE configuration related to the UE is available in the core network node, the INITIAL CONTEXT SETUP REQUEST NGAP message includes an indication of whether QoE information or QoE configuration related to the UE is available in the core network node.
- Transmitting, **to the UE a request to return to RRC_CONNECTED,** e.g. in an *RRCSetup* message (see, e.g., step 324 of Figure 3);
- Receiving an *RRCSetupComplete* message from the UE (see, e.g., step 326 of Figure 3);
   o As an option, the *RRCSetupComplete* message, may include an indication that one or more report(s) containing results of QoE and/or RVQoE measurements performed at least partly in RRC_IDLE state is available in the UE.
   ∘ As an option, the *RRCSetupComplete* message may include an indication that the UE has a QoE configuration configuring QoE measurements to be performed at least partly in RRC_IDLE state.
- **Transmitting, to the core** network node an INITIAL CONTEXT SETUP RESPONSE NGAP message (see, e.g., step 328 of Figure 3).
   ∘ As one option, if the INITIAL UE MESSAGE NGAP message neither included an explicitly or implicit request for QoE information or QoE configuration related to the UE, nor an explicit or implicit request for an indication of whether QoE information or QoE configuration related to the UE is available in the core network node, then the INITIAL CONTEXT SETUP RESPONSE NGAP message may contain a request for QoE information or QoE configuration related to the UE.
   ∘ As another option, if the INITIAL CONTEXT SETUP REQUEST NGAP message included an indication of QoE information or QoE configuration related to the UE available in the core network node, the INITIAL CONTEXT SETUP RESPONSE NGAP message may contain a request for QoE information or QoE configuration related to the UE.
   ∘ As another option, if the *RRCSetupComplete* message included an indication that the UE has a QoE configuration configuring QoE measurements to be performed at least partly in RRC_IDLE state, the INITIAL CONTEXT SETUP RESPONSE NGAP message may contain a request for QoE information or QoE configuration related to the UE.
- Optionally, if the INITIAL CONTEXT SETUP RESPONSE NGAP message contained a request for QoE information or QoE configuration related to the UE, receiving from the core network node a message comprising QoE information or QoE configuration related to the UE.
   o If this step is performed, it may optionally be performed after the subsequent step of transmitting an *RRCReconfiguration* message to the UE, or optionally after the steps of transmitting an *RRCReconfiguration* message to the UE and receiving an *RRCReconfigurationComplete* message from the UE.
- **Transmitting, to a UE, a message,** e.g. an *RRCReconfiguration* message, **containing a UE configuration** (see, e.g., step 330 of Figure 3).
   ∘ The configuration may contain configuration of how the UE may transmit QoE reports and/or RAN visible QoE report, e.g. configuration of SRB4.
- **Receiving,** from the UE, a message, e.g. and ***RRCReconfigurationComplete*** message (see, e.g., step 332 of Figure 3).
- Optionally **transmitting a message to the UE requesting the UE to send one or more QoE and/or RVQoE report(s)** containing QoE and/or RVQoE measurement results of QoE and/or RVQoE measurements performed at least partly while the UE was in RRC_IDLE state.
   ∘ As one option, this message may be a *UEInformationRequest* message.
   ∘ This step may optionally be performed before the step of transmitting an *RRCReconfiguration* message to the UE.
- **Receiving from the UE a message containing one or more QoE and/or RVQoE report(s)** containing QoE and/or RVQoE measurement results of QoE and/or RVQoE measurements performed at least partly while the UE was in RRC_IDLE state (see, e.g., step 334 of Figure 3).
   ∘ As one option, this message is *a MeasurementReportAppLayer* message.
   ∘ As another option, this message is a *UEInformationResponse* message.
- **Forwarding the QoE report(s) and/or RVQoE report(s) received from the UE (which were collected by the UE at least partially in RRC_IDLE), in accordance with the QoE information for the UE** (see, e.g., step 336 of Figure 3). For example, the QoE report(s) may be forwarded to an MCE identified by an MCE address included in the QoE information for the UE. If requested to do so (e.g., the request being received from the CN node, which received it from the first RN node), the second RN node **forwards, to the first RN node, one or more RVQoE report(s) collected (at least partly) in RRC_IDLE** (see, e.g., step 336 of Figure 3). The forwarding may take place e.g., via the CN node.

### 2.2.2 A Method Executed by a User Equipment

The present disclosure comprises a method **executed by a User Equipment (UE) (e.g., UE 300 of** **Figure 3****),** the method comprising:
- Receiving, **from a radio network** node (e.g., the first radio network node such as, e.g., the first RN node 302 of Figure 3)), a **request to perform QoE measurements and/or RAN visible QoE measurements when in RRC_IDLE** (i.e., a QoE configuration and/or a RAN visible QoE configuration) (see, e.g., step 312 of Figure 3);
   ▪ Optionally, the message may also contain an instruction to the UE to, when sending the RVQoE reports collected during RRC_IDLE to the second RN node, includes an indication that these RVQoE reports are to be forwarded to the first RN node. Moreover, the instruction may also contain the identifier(s) of the first RN node, e.g., an address, gNB ID etc.
- **Receiving,** from a radio network node (e.g., the first radio network node such as, e.g., the first RN node 302 of Figure 3), **a request to transfer to RRC_IDLE** (e.g., an *RRCRelease* message) (see, e.g., step 312 of Figure 3). The requests to perform QoE measurements and/or RAN visible QoE measurements when in RRC_IDLE and the request to transfer to RRC_IDLE may be included in the same message (e.g., an *RRCrelease* message);
- If triggered, e.g. if a concerned application session is started or ongoing, e.g. an application session conveyed via MBS, perform QoE measurements in accordance with the received QoE and/or RVQoE configuration (see, e.g., step 316 of Figure 3).
- **Transmitting, to a radio network** node (e.g., the second radio network node such as, e.g., the second RN node 304 of Figure 3), a **request to return to RRC_CONNECTED,** e.g. in an *RRCSetupRequest* message (see, e.g., step 318 of Figure 3);
   o The request may contain an indication that the UE has a QoE report and/or RAN visible QoE report to transmit. The indication may, e.g., also be included in *RRCSetupComplete* or *RRCReconfigurationComplete.*
   ∘ In case of network initiated RRC setup, this message is not transmitted.
- **Receiving,** from a radio network node (e.g., the second radio network node), a **request to return to RRC_CONNECTED,** e.g. in an *RRCSetup* message (see, e.g., step 324 of Figure 3).
- **Transmitting an *RRCSetupComplete*** to the radio network node (e.g., the second radio network node) (see, e.g., step 326 of Figure 3);
   o In the *RRCSetupComplete* message, the UE may include an indication that one or more report(s) containing results of QoE and/or RVQoE measurements performed at least partly in RRC_IDLE state is available in the UE.
   o As an option, the *RRCSetupComplete* message may include an indication that the UE has a QoE configuration configuring QoE and/or RVQoE measurements to be performed at least partly in RRC_IDLE state.
- Optionally **receiving, from a radio network node (e.g., the second radio network node), a message,** e.g. an *RRCReconfiguration* message **containing a UE configuration** (see, e.g., step 330 of Figure 3).
   o The configuration may contain configuration of how the UE may transmit QoE reports and/or RAN visible QoE reports, e.g. configuration of SRB4.
- Optionally, **transmitting, to the radio network node** (e.g., a second radio network node), **a message, e.g. *RRCReconfigurationComplete*** message (see, e.g., step 332 of Figure 3). This step is performed only if the preceding step of receiving a message, e.g. an *RRCReconfiguration* message, from a network node was executed.
- Optionally receiving from a radio network node (e.g., the second radio network node) a request to transmit one or more report(s) containing results of QoE measurements performed at least partly while the UE was in RRC_IDLE state.
- **Transmitting to a radio network** node (e.g., the second radio network node) a message including one or more report(s) containing **results of QoE and/or RVQoE measurements** performed at least partly while the UE was in RRC_IDLE state, e.g. a *MeasurementReportAppLayer* message or a *UEInformationResponse* message (see, e.g., step 334 of Figure 3). The UE may also contain an indication to the second RN node that, one or more RVQoE report(s) collected (at least partly) during the RRC_IDLE state are to be forwarded to the first RN node. An indication may also contain the identifier(s) of the first RN node, e.g., an address, gNB ID etc.

### 2.2.3 A Method Executed by a Core Network Node

The present disclosure comprises a method executed by a Core Network Node (e.g., core network node 306 of Figure 3), the method comprising:
- **Receiving, from a radio network** node, e.g., a gNB or an eNB, a message comprising a **request to store QoE information or QoE configuration** related to a certain UE (see, e.g., step 310 of Figure 3).
   ∘ The request may contain the MCE address, to which the QoE reports should be forwarded. Also, other QoE information may be included.
   ∘ The request could, e.g., be included in an NGAP message such as UE CONTEXT RELEASE REQUEST, UE CONTEXT RELEASE COMPLETE, in another existing message or a new message.
   ∘ In case the first RN node wishes to receive one or more RVQoE report(s) collected (at least partly) during RRC_IDLE, even if the UE returns from RRC_IDLE to RRC_CONNECTED under an RN node different than the first (say second Radio Network node), the request also contains an indication of such a need from the first RN node, and it may also contain the identifier(s) (e.g., an address) of the first RN node that the second RN node will use to forward to the first RN node one or more RVQoE reports (at least partly) collected during RRC_IDLE, and received after the UE returns to RRC_CONNECTED.
- **Receiving, from a radio network** node, a **request to setup a connection to the UE** (where the radio network node may be the same or a different radio network node than the radio network node that in the preceding step sent the request to store QoE information or QoE configuration or configuration related to the UE) (see, e.g., step 320 of Figure 3). The request may be contained in an INITIAL UE MESSAGE NGAP message. The message may further contain an implicit or explicit request for QoE information or QoE configuration related to the UE which is stored in the core network node (if any such information is stored in the core network node);
- Optionally, **receiving a from a radio network node** (i.e. the radio network node which transmitted the request to setup a connection to the UE, e.g. in an INITIAL UE MESSAGE NGAP message), a message (e.g., e.g. an INITIAL CONTEXT SETUP RESPONSE NGAP message or a new NGAP message) containing a request to send QoE information or QoE configuration related to the UE which is stored in the core network node (if any such information is stored in the core network node) (see, e.g., step 320 of Figure 3).
- Transmitting a **response to a radio network node** (i.e., the radio network node which transmitted the request to setup a connection to the UE, e.g. in an INITIAL UE MESSAGE NGAP message), where the response message contains QoE information or QoE configuration related to the UE (see, e.g., step 322 of Figure 3);
   o The response may contain the MCE address, to which the QoE reports should be forwarded. It may also contain an indication that one or more RVQoE reports collected during RRC_IDLE are to be forwarded to the first RN node, and it may also contain the identifier(s) of the first RN node. Also, other QoE information may be included.
   ∘ The QoE information or QoE configuration related to the UE could, e.g., be included in an INITIAL CONTEXT SETUP REQUEST NGAP message;
   o Alternatively, the core network node may transmit the QoE information or QoE configuration related to the UE in a new NGAP message, e.g. if a request for the information was received in an INITIAL CONTEXT SETUP RESPONSE message or a new NGAP message.
- In case one or more RVQoE report(s) collected (at least partly) during RRC_IDLE are forwarded from the second RN node to the first RN node (as requested by the first RN node), **forwarding** the said RVQoE report(s) to the first RN node, directly or via another CN node.

### 2.2.4 Further Clarifications and Options

In all methods and options described above in section 2.2.1, 2.2.2, and 2.2.3, the QoE information or QoE configuration related to the UE, which is signaled between the RAN and the core network and which is stored in the core network while the UE is in RRC_IDLE state may include or be accompanied by an MCE address.

In all methods and options described above in section 2.2.1, 2.2.2., and 2.2.3, the QoE information or QoE configuration related to the UE, which is signaled between the RAN and the core network and which is stored in the core network while the UE is in RRC_IDLE state may have the form of a container that is transparent to the core network node, i.e. a parameter container, e.g. a bit string, whose content the core network node cannot interpret (or does not interpret or is not expected to interpret).

The first and the second radio network nodes may be gNBs or eNBs.

The core network node mentioned in the methods described in section 2.2 may be an AMF (e.g., if the first and second radio network nodes are gNBs) or an MME (e.g., if the first and second radio network nodes are eNBs).

In an inter-core network node scenario, e.g. in an inter-AMF scenario, i.e. when the UE enters RRC_CONNECTED state in another core network node (e.g. denoted as a second core network node) than the core network node where the QoE information or QoE configuration related to the UE is stored (e.g. denoted as a first core network node) (which is equivalent to that the first radio network node and the second radio network node communicates with different core network nodes), the QoE information or QoE configuration related to the UE is transferred from the first core network node to the second core network node together with other information related to the UE (as a part of the regular procedure of transferring UE related information between core network nodes). In case the first and the second RN node are communicating with different core network nodes (e.g., different AMFs, inter-AMF scenario), the RVQoE reports collected (at least partly) during RRC_IDLE are transferred from the second CN node (serving the second RN node) to the first CN node (serving the first RN node).

### 2.3 Storing QoE Information in the gNB

Figure 4 illustrates the operation of a UE 400, a first RN node (gNB1 in the illustrated example) 402, a second RN node (gNB2 in the illustrated example) 404, and an MCE 406. The **QoE information is stored in the gNB the while the UE is in RRC_IDLE.** If the UE returns to RRC_CONNECTED in a different gNB than it was when it was transferred to RRC_IDLE, the information is retrieved from the first gNB when the UE returns to RRC_CONNECTED.

The solution comprises methods executed by, respectively, the first RN node 402, the second RN node 404, and the UE 400, each of which are described below with reference to Figure 4 as an example.

The present disclosure comprises a method executed by a first Radio Network Node (e.g., the first RN node 402 of Figure 4), the method comprising:
- **Transmitting, to a UE (e.g., UE 400), a request to perform QoE and/or RVQoE measurements** when in RRC_IDLE (see, e.g., step 410 of Figure 4);
   o This request may be:
      ▪ transmitted at any time, at an earlier stage, or
      ▪ transmitted together with the request to the UE to transfer to RRC_IDLE;
   o (The following may be included here or in the next step, i.e., when transmitting to the UE a request to transfer to RRC_IDLE) The request to perform QoE and/or RVQoE measurements in RRC_IDLE may also contain an indication to the UE that, in case the UE returns to RRC_CONNECTED under another RN node (say second RN node), the UE should, when sending to the second RN node one or more RVQoE reports collected (at least partly) during RRC_IDLE to the second RN node, indicate to the second RN node that the said RVQoE report(s) are to be forwarded to the first RN node. One or more identifier(s) of the first RN node may also be included in the request, e.g., gNB ID, address etc.
- **Transmitting,** to the UE, a **request to transfer to RRC_IDLE** (see, e.g., step 410 of Figure 4);
   o In one variant, the solution applies only if the request is for transitioning the UE from RRC_CONNECTED to RRC_IDLE
   o in another variant, the solution applies only if the request is for transitioning the UE from RRC_INACTIVE to RRC_IDLE
   o in another variant, the solution applies only if the request to transfer to RRC_IDLE does not include a redirection to a carrier belonging to a different RAT
   o in another variant, the solution applies only if the request to transfer to RRC_IDLE does not include a redirection to a different CN type
- **Storing QoE/RVQoE information in the gNB,** including storing mapping between the UE and the QoE/RVQoE information (see, e.g., step 408 of Figure 4).
   ∘ The QoE/RVQoE information stored may comprise the MCE identity, and it may also contain more information related to QoE.
   ∘ The information to identify the UE may comprise S-TMSI, Serving Temporary Mobile Subscriber Identity.
   ∘ The information to identify the UE may comprise some other existing identity, e.g. a C-RNTI, a RAN UE NGAP ID, an AMF UE NGAP ID.
   ∘ The information to identify the UE may comprise a new identity. The identity may be a new identity specific to QoE, or it may be a new identity which may be used for other purposes also.
- **Receiving, from another gNB (e.g., second RN node, e.g., the second RN node 404 of** **Figure 4****), a request for retrieval of QoE/RVQoE information** for a specific UE (see, e.g., step 422 of Figure 4). The UE may be identified by different means:
   ∘ The information to identify the UE may comprise S-TMSI, Serving Temporary Mobile Subscriber Identity.
   ∘ The information to identify the UE may comprise some other existing identity, e.g. a C-RNTI, a RAN UE NGAP ID, an AMF UE NGAP ID.
   ∘ The information to identify the UE may comprise a new identity. The identity may be a new identity specific to QoE, or it may be a new identity which may be used for other purposes also.
   ∘ The request may be included in UE CONTEXT RETRIEVAL REQUEST, in another existing message, or in a new message.
- **Transmitting, to another gNB, QoE/RVQoE information** for a specific UE (see, e.g., step 424 of Figure 4).
   ∘ The QoE/RVQoE information may comprise the MCE identity, and it may also contain more information related to QoE.
   ∘ The request may be included in UE CONTEXT RETRIEVAL RESPONSE, in another existing message, or in a new message.
   ∘ The information may also include request for the second RN node to forward to the first RN node one or more RVQoE reports collected (at least partly) during RRC_IDLE.

The present disclosure comprises a method **executed by a second Network Node** (e.g., the second RN node 404 of Figure 4), the method comprising:
- Receiving, from a UE, a **request to transition from RRC_IDLE to RRC_CONNECTED,** e.g. in an *RRCSetupRequest* message (see, e.g., step 416 of Figure 4);
   o The request may contain an indication that the UE has a QoE report to transmit. The request may, e.g., also be included in *RRCSetupComplete* or *RRCReconfigurationComplete.*
   ∘ In case of network initiated RRC setup, this message is not transmitted.
- **Transmitting, to another gNB (e.g., the first RN node), a request for retrieval of QoE/RVQoE information** for a specific UE (see, e.g., step 422 of Figure 4). The UE may be identified by different means:
   ∘ The information to identify the UE may comprise S-TMSI, Serving Temporary Mobile Subscriber Identity.
   ∘ The information to identify the UE may comprise some other existing identity, e.g. a C-RNTI, a RAN UE NGAP ID, an AMF UE NGAP ID.
   ∘ The information to identify the UE may comprise a new identity. The identity may be a new identity specific to QoE, or it may be a new identity which may be used for other purposes also.
   ∘ The request may be included in UE CONTEXT RETRIEVAL REQUEST, in another existing message, or in a new message.
- **Receiving, from another gNB (e.g., the first RN node), QoE/RVQoE information** for a specific UE (see, e.g., step 424 of Figure 4).
   ∘ The QoE/RVQoE information may comprise the MCE identity, and it may also contain more information related to QoE.
   o The request may be included in UE CONTEXT RETRIEVAL RESPONSE, in another existing message, or in a new message.
- **Transmitting,** to a UE a **request to transition from RRC_IDLE to RRC_CONNECTED,** e.g. in an *RRCSetup* message (see, e.g., step 418 of Figure 4);
- **Receiving an *RRCSetupComplete*** from a UE (see, e.g., step 420 of Figure 4);
- **Transmitting,** to a UE, a **message,** e.g. *RRCReconfiguration,* **containing a UE configuration** (see, e.g., step 426 of Figure 4).
   ∘ The configuration may contain configuration of how the UE may transmit QoE reports, e.g. configuration of SRB4.
- **Receiving,** from a UE, a message, e.g. ***RRCReconfigurationComplete*** (see, e.g., step 428 of Figure 4).
- **Receiving from the UE a message containing one or more QoE and/or RVQoE report(s)** containing QoE and/or RVQoE measurement results of QoE and/or RVQoE measurements performed at least partly while the UE was in RRC_IDLE state (see, e.g., step 430 of Figure 4).
   ∘ As one option, this message is *a MeasurementReportAppLayer* message.
   ∘ As another option, this message is a *UEInformationResponse* message.
- **Forwarding the QoE report(s) and/or RVQoE report(s) received from the UE (which were collected by the UE at least partially in RRC_IDLE), in accordance with the QoE information for the UE** (see, e.g., step 432 of Figure 4). For example, the QoE report(s) may be forwarded to an MCE identified by an MCE address included in the QoE information for the UE. For RVQoE report(s), this forwarding includes transmitting, to the first RN node, one or more RVQoE reports collected (at least partly) by the UE during RRC_IDLE.

The UE may return from RRC_IDLE in the same gNB as it was connected to when it was transferred to RRC_IDLE. In such case the first and the second gNB are the same, and no request to retrieve QoE information between nodes needs to be sent. Instead, the gNB may retrieve the QoE information from its own storage.

The present disclosure comprises a method **executed by a User Equipment (UE)** (e.g., UE 400 of Figure 4), the method comprising:
- **Receiving,** from a network node, a **request to perform QoE/RVQoE measurements when in RRC_IDLE** (see, e.g., step 410 of Figure 4);
   o Optionally, the message may also contain an instruction to the UE to, when sending the RVQoE reports collected during RRC_IDLE to the second RN node, includes an indication that these RVQoE reports are to be forwarded to the first RN node. Moreover, the instruction may also contain the identifier(s) of the first RN node, e.g., an address, gNB ID etc.
- **Receiving,** from a network node, **a request to transfer to RRC_IDLE** (see, e.g., step 410 of Figure 4). The requests to perform QoE/RVQoE measurements when in RRC_IDLE and the request to transfer to RRC_IDLE may be included in the same message;
- **Transmitting,** to a network node, a **request to transition from RRC_IDLE to RRC_CONNECTED,** e.g. in an *RRCSetupRequest* message (see, e.g., step 416 of Figure 4);
   o The request may contain an indication that the UE has a QoE/RVQoE report to transmit. The request may, e.g., also be included in *RRCSetupComplete* or *RRCReconfigurationComplete.*
   ∘ In case of network initiated RRC setup, this message is not transmitted.
- **Receiving,** from a network node, a **request to return to RRC_CONNECTED,** e.g. in an *RRCSetup* message (see, e.g., step 418 of Figure 4).
- **Transmitting an *RRCSetupComplete*** to the network (see, e.g., step 420 of Figure 4);
- **Receiving,** from a network node, a **message,** e.g. *RRCReconfiguration,* **containing a UE configuration** (see, e.g., step 426 of Figure 4).
   ∘ The configuration may contain configuration of how the UE may transmit QoE/RVQoE reports, e.g. configuration of SRB4.
- **Transmitting,** to a network node, a **message, e.g. *RRCReconfigurationComplete*** (see, e.g., step 428 of Figure 4).
- **Transmitting,** to a network node (e.g., second RN node), **one or more QoE reports** collected, at least partially, during RRC_IDLE (see, e.g., step 410 of Figure 4). The one or more QoE reports may include **one or more RVQoE reports collected** (at least partly) during RRC_IDLE, and an indication that the said RVQoE report(s) is (are) to be forwarded to the first RN. One or more identifier(s) of the first RN node may also be included in the request, e.g., gNB ID, address etc.

### 2.4 Storing QoE Information in the UE

Figure 5 illustrates the operation of a UE 500, a first RN node (gNB1 in the illustrated example) 502, a second RN node (gNB2 in the illustrated example) 504, and an MCE 506 in accordance with one embodiment of a third solution disclosed herein. In the third solution, the **QoE information is stored in the UE (e.g., UE 500) the while the UE is in RRC_IDLE.** When the UE returns to RRC_CONNECTED it transmits the QoE information to the network.

The solution comprises methods executed by respectively a first RN node (e.g., the first RN node 502), a second radio network node (e.g., the second RN node 504), and a UE (e.g., UE 500), each of which is described in the following subsections using the procedure of Figure 5 as an example.

### 2.4.1 Methods Executed by a first radio network node and a Second Radio Network Node

The present disclosure comprises a method executed by a first Radio Network Node (e.g., the first RN node 502 of Figure 5), the method comprising:
- **Transmitting,** to a UE (e.g., the UE 500 of Figure 5), a **request to perform QoE/RVQoE** measurements when **in RRC_IDLE** (see, e.g., step 508 of Figure 5);
   o This request may be:
      ▪ transmitted at any time, at an earlier stage, e.g. in an *RRCReconfiguration* message, or:
         ▪ transmitted together with the request to the UE to transfer to RRC_IDLE, e.g. in an *RRCRelease* message, i.e. together with the subsequent step;
   o (The following may be included here or in the next step, i.e., when transmitting to the UE a request to transfer to RRC _IDLE) The request to perform QoE and/or RVQoE measurements in RRC_IDLE may also contain an indication to the UE that, in case the UE returns to RRC_CONNECTED under another RN node (say second RN node), the UE should, when sending to the second RN node one or more RVQoE reports collected (at least partly) during RRC_IDLE to the second RN node, indicate to the second RN node that the said RVQoE report(s) are to be forwarded to the first RN node. One or more identifier(s) of the first RN node may also be included in the request, e.g., gNB ID, address etc.
- **Transmitting,** to the UE, a **request to transfer to RRC_IDLE,** e.g. an *RRCRelease* message (see, e.g., step 508 of Figure 5);
   o The request may contain QoE/RVQoE information, which the UE should store while the UE is in RRC_IDLE.
   ∘ The request may contain the MCE address, to which the QoE reports should be forwarded. Also, other QoE information may be included. The MCE address may be seen as a part of the QoE information, part of the QoE configuration or as a parameter associated with or sent together with the QoE information or the QoE configuration.
   ∘ The QoE/RVQoE information may be comprised in the message transferring the UE to RRC _IDLE, or it may be comprised in another message, e.g. an *RRCReconfiguration* message.
   ∘ The request may contain the indication of a UE timer (e.g., *Timer_for_QoE_storage_RRC_IDLE*) to be used for maintaining the stored information in the UE. The UE is supposed to, or is allowed to, delete the stored information when the timer expires, the timer starting at reception of the request to transfer to RRC_IDLE.
   ∘ In one variant, the solution applies only if the request is for transitioning the UE from RRC_CONNECTED to RRC_IDLE;
   o in another variant, the solution applies only if the request is for transitioning the UE from RRC_INACTIVE to RRC_IDLE
   o in another variant, the solution applies only if the request to transfer to RRC_IDLE does not include a redirection to a carrier belonging to a different RAT
   o in another variant, the solution applies only if the request to transfer to RRC_IDLE does not include a redirection to a different CN type

The present disclosure comprises a method **executed by a second Radio Network Node** (which may be a different Radio Network Node or the same Radio Network Node as the first Radio Network Node) (e.g., the second RN node 504 of Figure 5), the method comprising:
- **Receiving,** from a UE (e.g., the UE 500), a **request to return to RRC_CONNECTED,** e.g. in an *RRCSetupRequest* message (see, e.g., step 514 of Figure 5);
   o The request may contain an indication that the UE has a QoE/RVQoE report to transmit. The indication may, e.g., also be included in an *RRCSetupComplete* message or an *RRCReconfigurationComplete* message.
   ∘ The request may contain an indication of availability of QoE information (e.g., including an MCE address) stored in the UE on behalf of the network while the UE was in RRC_IDLE state.
   ∘ In case of network initiated RRC setup, this message is not transmitted.
- **Transmitting,** to a UE a **request to transition from RRC_IDLE** to RRC_CONNECTED, e.g. in an *RRCSetup* message (see, e.g., step 516 of Figure 5);
- **Receiving an *RRCSetupComplete* from a UE** (see, e.g., step 518 of Figure 5);
   o **The message may** contain QoE/RVQoE information that the UE has stored (e.g., stored on behalf of the network while the UE was in RRC_IDLE state), e.g. the MCE address and other QoE information. Alternatively, this information is received in another message.
      ▪ As an alternative, the message may contain an indication of availability at the UE of QoE/RVQoE information (e.g., including an MCE address) that the UE has stored (e.g., stored on behalf of the network while the UE was in RRC_IDLE state)
   o The message may contain an indication that the UE has a QoE/RVQoE report to transmit. Alternatively, the indication may, e.g., be included in an *RRCSetupRequest* message or an *RRCReconfigurationComplete* message.
- **Transmitting,** to the UE, a **message,** e.g. an ***RRCReconfiguration* message,** containing a UE configuration (see, e.g., step 520 of Figure 5).
   ∘ The configuration may contain configuration of how the UE may transmit QoE/RVQoE reports, e.g. configuration of SRB4.
- **Receiving, from a UE,** a message, e.g. ***RRCReconfigurationComplete*** (see, e.g., step 522 of Figure 5).
   ∘ The message may contain QoE/RVQoE information that the UE has stored while in RRC_IDLE state, e.g. the MCE address and other QoE information. Alternatively, this information is received in another message, e.g. in *UEAssistanceInformation.*
- **Receiving, from a UE, one or more QoE reports** collected, at least partially, during RRC_IDLE (see, e.g., step 508 of Figure 5). The one or more QoE reports may include **one or more RVQoE reports collected** (at least partly) during RRC_IDLE, and the second RN may further receive an indication (e.g., in the RVQoE report(s) or separately from the RVQoE report(s)) that the said RVQoE report(s) is (are) to be forwarded to the first RN. One or more identifier(s) of the first RN node may also be included with the RVQoE reports, e.g., gNB ID, address etc.
- **Forwarding the QoE report(s) and/or RVQoE report(s) received from the UE (which were collected by the UE at least partially in RRC_IDLE), in accordance with the QoE information for the UE** (see, e.g., step 526 of Figure 5). For example, the QoE report(s) may be forwarded to an MCE identified by an MCE address included in the QoE information for the UE. **If so requested, this forwarding includes transmitting (i.e., forwarding) to the first RN node one or more RVQoE reports collected** (at least partly) during RRC_IDLE.
- Optionally, if the second radio network node has received from the UE an indication of availability of QoE information (e.g., including an MCE address) which the UE has stored on behalf of the network while the UE was in RRC_IDLE state, the second RN node transmits, to the UE, a request to send the QoE information the UE has stored on behalf of the network while the UE was in RRC_IDLE state. This request may be sent either before or after receiving the QoE and/or RVQoE measurement report(s). This request may as one option be sent in a *UEInformationRequest* message or, as another option, in an *RRCReconfiguration* message. If the request is transmitted in an *RRCReconfiguration* message, this message may be the one in the previous step where the second radio network node transmitted a message to the UE (e.g., an *RRCReconfiguration* message). Otherwise, this step may optionally be performed before the above step of transmitting a message, e.g. an *RRCReconfiguration* message, to the UE.
- Optionally, if the preceding step of transmitting to the UE a request for stored QoE information was performed, the second RN node receives, from the UE, a message containing the QoE information requested in the preceding step. This receiving step is performed prior to the forwarding step described above.
   ∘ As one option, this message may be a *UEInformationResponse* message (e.g., if the UE transmitted the request in the preceding step in a *UEInformationRequest* message.
   ∘ As another option, this message may be *a MeasurementReportAppLayer* message.
   ∘ This step together with the preceding step may optionally be performed before the above step of transmitting a message, e.g. an *RRCReconfiguration* message, to the UE.

### 2.4.2 A Method Methods Executed by a User Equipment

The present disclosure comprises a method **executed by a User Equipment (UE) (e.g., UE 500 of** **Figure 5****),** the method comprising:
- **Receiving,** from a radio network node (e.g., the first radio network node, e.g., the first RN node 502 of Figure 5)), a **request to perform QoE/RVQoE measurements when in RRC_IDLE** (i.e., a QoE configuration and/or a RAN visible QoE configuration) (see, e.g., step 508 of Figure 5);
   o This request may be received at any time, at an earlier stage, or:
   o together with the request to the UE to transfer to RRC_IDLE (i.e., together with the subsequent step), e.g. in an *RRCRelease* message;
   ∘ (The following may be included here or in the next step, i.e., when receiving from the network node a request to transfer to RRC _IDLE) The request to perform QoE and/or RVQoE measurements in RRC_IDLE may also contain an indication to the UE that, in case the UE returns to RRC_CONNECTED under another RN node (say second RN node), the UE should, when sending to the second RN node one or more RVQoE reports collected (at least partly) during RRC_IDLE, indicate to the second RN node that the said RVQoE report(s) are to be forwarded to the first RN node. One or more identifier(s) of the first RN node may also be included in the request, e.g., gNB ID, address etc.
- **Receiving,** from a radio network node (e.g., the first radio network node), **a request to transfer to RRC_IDLE** (see, e.g., step 508 of Figure 5).
   ∘ The request may contain QoE/RVQoE information, which the UE should store while the UE is in RRC_IDLE.
   ∘ The request may contain the MCE address, to which the QoE reports should be forwarded. Also, other QoE information may be included. The MCE address may be seen as a part of the QoE information, part of the QoE configuration or as a parameter associated with or sent together with the QoE information or the QoE configuration.
   ∘ The QoE/RVQoE information may be comprised in the message transferring the UE to RRC _IDLE, e.g. an *RRCRelease* message, or it may be comprised in another message, e.g. an *RRCReconfiguration* message.
   ∘ In one variant, the solution applies only if the request is for transitioning the UE from RRC_CONNECTED to RRC_IDLE;
   ∘ in another variant, the solution applies only if the request is for transitioning the UE from RRC_INACTIVE to RRC_IDLE
   ∘ in another variant, the solution applies only if the request to transfer to RRC_IDLE does not include a redirection to a carrier belonging to a different RAT
   ∘ in another variant, the solution applies only if the request to transfer to RRC_IDLE does not include a redirection to a different CN type
- **If triggered,** e.g. if a concerned application session is started or ongoing, e.g. an application session conveyed via MBS, **perform QoE measurements** in accordance with the received QoE configuration (see, e.g., step 512 of Figure 5).
- **Transmitting,** to a radio network node (e.g., the second radio network node), a **request to return to RRC_CONNECTED**, e.g. in an *RRCSetupRequest* message (see, e.g., step 514 of Figure 5);
   o The message may contain an indication that the UE has a QoE/RVQoE report to transmit. The indication may alternatively e.g. be included in an *RRCSetupComplete* message or an *RRCReconfigurationComplete* message.
   ∘ The message may contain an indication of availability at the UE of QoE information (e.g., including an MCE address) that the UE has stored on behalf of the network while the UE was in RRC_IDLE state. This indication may alternatively be included in an *RRCSetupComplete* message.
   ∘ In case of network initiated RRC setup, this message is not transmitted.
- **Receiving,** from a radio network node (e.g., the second radio network node), a **request to transition from RRC_IDLE to RRC_CONNECTED,** e.g. in an *RRCSetup* message (see, e.g., step 516 of Figure 5).
- **Transmitting** an ***RRCSetupComplete*** message to the radio network node (e.g., the second radio network node) (see, e.g., step 518 of Figure 5);
   o The message may contain the MCE address, to which the QoE reports should be forwarded. Also, other QoE information may be included.
   ∘ The message may contain an indication that the UE has a QoE/RVQoE report to transmit. This indication may alternatively, e.g., be included in an *RRCSetupRequest* message or *RRCReconfigurationComplete.*
   ∘ The message may contain an indication of availability at the UE of QoE information (e.g., including an MCE address) that the UE has stored on behalf of the network while the UE was in RRC_IDLE state. This indication may alternatively be included in an *RRCSetupRequest* message.
- **Receiving,** from a network node, a **message,** e.g. an *RRCReconfiguration* message, **containing a UE configuration** (see, e.g., step 520 of Figure 5).
   ∘ The configuration may contain configuration of how the UE may transmit QoE reports, e.g. configuration of SRB4.
- **Transmitting,** to a network node, a **message, e.g. an *RRCReconfigurationComplete*** message (see, e.g., step 522 of Figure 5).
   ∘ The message may contain the MCE address, to which the QoE reports should be forwarded. Also, other QoE/RVQoE information may be included.
   ∘ The message may contain QoE/RVQoE information that the UE has stored, e.g. the MCE address and other QoE information. Alternatively, this information is transmitted in another message, e.g. in *UEAssistanceInformation.*
- **Sending, to a network node (e.g., second RN node) one or more QoE reports collected** (at least partly) during RRC_IDLE (see, e.g., step 524 of Figure 5). The one or more QoE reports may include **one or more RVQoE reports collected** (at least partly) during RRC_IDLE, and the second RN may further receive an indication (e.g., in the RVQoE report(s) or separately from the RVQoE report(s)) that the said RVQoE report(s) is (are) to be forwarded to the first RN. One or more identifier(s) of the first RN node may also be included with the RVQoE reports, e.g., gNB ID, address etc.
- Optionally, if the UE has sent to the radio network node (e.g., the second radio network node) an indication of availability at the UE of QoE information (e.g., including an MCE address) which the UE has stored on behalf of the network while the UE was in RRC_IDLE state, the UE may receive from the radio network node a request to send the QoE information the UE has stored on behalf of the network while the UE was in RRC_IDLE state. This request may as one option be received in a *UEInformationRequest* message or, as another option, in an *RRCReconfiguration* message. If the request is received in an *RRCReconfiguration* message, this message may be the one in the previous step where the UE receives a message (e.g., an *RRCReconfiguration* message) from the radio network node (e.g., the second radio network node). Otherwise, this step may optionally be performed before the above step of receiving a message, e.g. an *RRCReconfiguration* message, from the radio network node (e.g., the second radio network node).
- Optionally, if the preceding step of receiving from the radio network node to the UE a request for stored QoE information was performed, sending to the radio network node (e.g., the second radio network node) a message containing the QoE information requested by the radio network node (e.g., the second radio network node) in the preceding step.
   ∘ As one option, this message may be a *UEInformationResponse* message (e.g., if the UE received the request in the preceding step in a *UEInformationRequest* message.
   ∘ As another option, this message may be *a MeasurementReportAppLayer* message.
   o This step together with the preceding step may optionally be performed before the above step of receiving a message, e.g. an *RRCReconfiguration* message, from the radio network node (e.g., the second radio network node).

### 2.4.3 Further Clarifications, Options, and Notes

The QoE related information to be stored in the UE (on behalf of the network) while the UE is in RRC_IDLE state may be sent together with the QoE configuration that configures the QoE measurements to be performed at least partly while the UE is in RRC_IDLE state. Alternatively, the QoE configuration that configures the QoE measurements to be performed at least partly while the UE is in RRC_IDLE state is sent first, and the QoE related information to be stored in the UE (on behalf of the network) while the UE is in RRC_IDLE state is sent in another message at a subsequent occasion. As another alternative, the QoE related information to be stored in the UE (on behalf of the network) while the UE is in RRC_IDLE state, and an explicit or implicit indication for the UE to keep the information while in RRC_IDLE state, maybe included in (i.e., as an integral part of) the QoE configuration. As an integral part of the QoE configuration, this information and the indication may be included in the QMC configuration file or may be sent to the UE as QoE configuration data outside the QMC configuration file.

As one option, the QoE related information to be stored in the UE (on behalf of the network) while the UE is in RRC_IDLE state may be sent to the UE, stored in the UE, and sent back to the network in the form of a container that is transparent to the network, i.e. a parameter container, e.g. a bit string, whose content the UE cannot interpret (or does not interpret or is not expected to interpret).

As an option, the UE may be instructed by configuration or by standard specification that it should send QoE report(s) containing results of QoE measurements performed at least partly in RRC_IDLE state, or indicate the availability of such report(s) at the UE, only if it transits to RRC_CONNECTED state in the same cell as it was in when it was released to RRC_IDLE state (and/or optionally if it otherwise enters this cell in RRC_CONNECTED state, e.g. via handover).

If this option is configured, it may be configured when the QoE configuration is sent to the UE, or when the UE is released to RRC_IDLE state (e.g., in the *RRCRelease* message). As another alternative, the configuration may be conveyed via the system information.

As another option, the UE may be instructed by configuration or by standard specification that it should send QoE report(s) containing results of QoE measurements performed at least partly in RRC_IDLE state, or indicate the availability of such report(s) at the UE, only if it transits to RRC_CONNECTED state in the same cell as it was in when it received the QoE configuration which governed the QoE measurements whose results are in the pending report(s) (and/or optionally if it otherwise enters this cell in RRC_CONNECTED state, e.g. via handover).

If this option is configured, it may be configured in either of the ways described above for the preceding option.

As yet another option, the UE may be instructed by configuration or by standard specification that it should send QoE report(s) containing results of QoE measurements performed at least partly in RRC_IDLE state, or indicate the availability of such report(s) at the UE, only if it transits to RRC_CONNECTED state in a cell belonging to the same gNB as the cell it was in when it was released to RRC_IDLE state (and/or optionally if it otherwise enters such a cell in RRC_CONNECTED state, e.g. via handover).

If this option is configured, it may be configured in the same ways as the preceding option.

As yet another option, the UE may be instructed by configuration or by standard specification that it should send QoE report(s) containing results of QoE measurements performed at least partly in RRC_IDLE state, or indicate the availability of such report(s) at the UE, only if it transits to RRC_CONNECTED state in a cell belonging to the same gNB as the cell it was in when it received the QoE configuration which governed the QoE measurements whose results are in the pending report(s) (and/or optionally if it otherwise enters such a cell in RRC_CONNECTED state, e.g. via handover).

If this option is configured, it may be configured in the same ways as the preceding option.

As one option, the UE may be instructed by configuration or by standard specification that it should send to the network QoE information that it has stored on behalf of the network while in RRC_IDLE state (e.g. including an MCE address), or indicate the availability of such information, only if it transits to RRC_CONNECTED state in the same cell as it was in when it was released to RRC_IDLE state (and/or optionally if it otherwise enters this cell in RRC_CONNECTED state, e.g. via handover).

If this option is configured, it may be configured when the QoE configuration is sent to the UE, or when the QoE information the UE is to store on behalf of the network is sent to the UE, or when the instruction to store QoE information on behalf of the network is sent to the UE, or when the UE is released to RRC_IDLE state (e.g., in the *RRCRelease* message). As another alternative, the configuration may be conveyed via the system information.

As another option, the UE may be instructed by configuration or by standard specification that it should send to the network QoE information that it has stored on behalf of the network while in RRC_IDLE state (e.g. including an MCE address), or indicate the availability of such information, only if it transits to RRC_CONNECTED state in the same cell as it was in when it received the QoE information that it has stored while in RRC_IDLE state (and/or optionally if it otherwise enters this cell in RRC_CONNECTED state, e.g. via handover).

If this option is configured, it may be configured in either of the ways described above for the preceding option.

As yet another option, the UE may be instructed by configuration or by standard specification that it should send to the network QoE information that it has stored on behalf of the network while in RRC_IDLE state (e.g. including an MCE address), or indicate the availability of such information, only if it transits to RRC_CONNECTED state in a cell belonging to the same gNB as the cell it was in when it was released to RRC_IDLE state (and/or optionally if it otherwise enters such a cell in RRC_CONNECTED state, e.g. via handover).

If this option is configured, it may be configured in the same ways as the preceding option.

As yet another option, the UE may be instructed by configuration or by standard specification that it should send to the network QoE information that it has stored on behalf of the network while in RRC_IDLE state (e.g. including an MCE address), or indicate the availability of such information, only if it transits to RRC_CONNECTED state in a cell belonging to the same gNB as the cell it was in when it received the QoE information that it has stored while in RRC_IDLE state (and/or optionally if it otherwise enters such a cell in RRC_CONNECTED state, e.g. via handover).

If this option is configured, it may be configured in the same ways as the preceding option.

In some embodiments, the enabling, or triggering, of storing of QoE information in the UE (to be later restored/sent to the gNB) consists of only an indication to perform this storing, while the actual information to store was already available at the UE, delivered to the UE as part of the regular QoE configuration.

There are different options for determining in which message the QoE information is transmitted to the network. If the information is included in one message, it is likely not included in other messages.

### 2.5 Additional Embodiments on the Selection of the Storing Method

In one embodiment, storing at CN is used (starting with a Radio Network Node determining to transmit to a core network node, a message comprising a request to store QoE information or QoE configuration related to a certain UE) if the UE selection is done according to a signaling-based QoE configuration received from CN.

In one embodiment, storing at the RAN is used (starting with a Radio Network Node determining to store QoE information in RAN) if the UE selection is done according to a management-based QoE configuration received from OAM.

In one embodiment, storing at the UE is used (starting with a Radio Network Node determining to store QoE information in the UE) if the QoE configuration received at the RAN node (either s-based QoE or m-based QoE) or the RVQoE configuration prepared by the RAN node concerns a specific type of service, or use of Multimedia Broadcast Service.

In one embodiment, the type of storing depends on the content of the release message.
- In one case, at release with redirection to a different frequency in the same RAT, storing at RAN is selected (or storing at UE is selected)
- In another case, at release with redirection to a different RAT, storing at CN is selected.
- In another case, at release with redirection to a different type of CN, storing at RAN is selected
- In another case, at release from RRC_INACTIVE to RRC_IDLE, storing at CN is selected, or storing at UE selected.
- In another case, at release from RRC_CONNECTED to RRC_IDLE, storing at RAN is selected or storing at UE selected.

In one embodiment, the Radio Network node is configured from another network node (e.g. OAM) to follow the steps of the methods as described in one of the clauses 2.2, 2.3, or 2.4, and this configuration may also contain an indication of priority for each of the three methods (e.g., the Radio Network node is instructed to first attempt storing at CN, then, if that is not possible, storing at UE, and, if that is not possible, storing the QoE/RVQoE configuration itself). In one variant, the Radio Network node may be instructed to choose the same method (2.2, 2.3, or 2.4) for both QoE and RVQoE configuration. In another variant, it can be instructed to choose different methods for the two.

In one embodiment, the type of storing depends on the coordination between the Radio Network node and the CN node. In one variant, the coordination may be implicit, e.g., based on exchange of capabilities for storing between the nodes. In another variant, the coordination between the nodes may be explicit.

### 2.6 Further Description

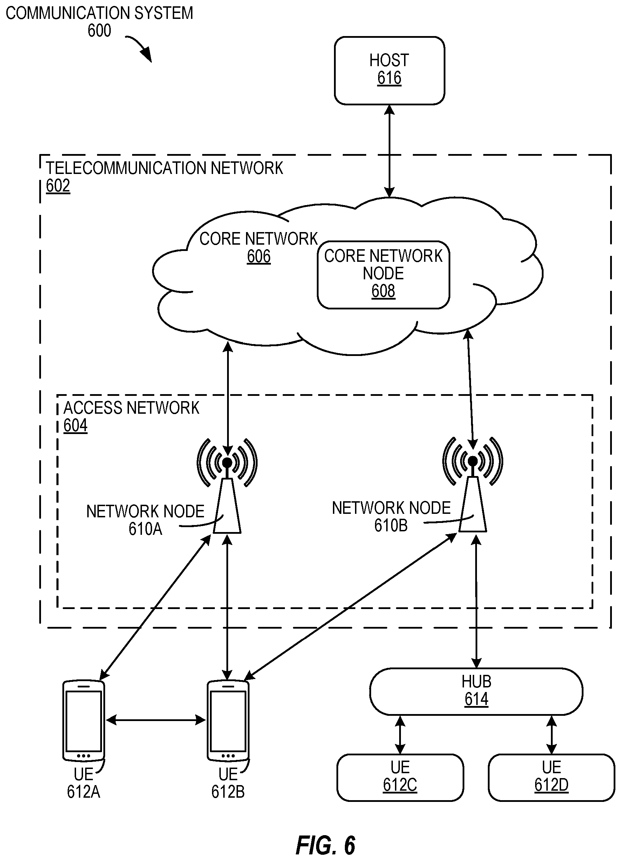

Figure 6 shows an example of a communication system 600 in accordance with some embodiments.

In the example, the communication system 600 includes a telecommunication network 602 that includes an access network 604, such as a Radio Access Network (RAN), and a core network 606, which includes one or more core network nodes 608. The access network 604 includes one or more access network nodes, such as network nodes 610A and 610B (one or more of which may be generally referred to as network nodes 610), or any other similar Third Generation Partnership Project (3GPP) access node or non-3GPP Access Point (AP). The network nodes 610 facilitate direct or indirect connection of User Equipment (UE), such as by connecting UEs 612A, 612B, 612C, and 612D (one or more of which may be generally referred to as UEs 612) to the core network 606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 600 may include any number of wired or wireless networks, network nodes, UEs, and/or any other components or systems that may facilitate or participate in the communication of data and/or signals whether via wired or wireless connections. The communication system 600 may include and/or interface with any type of communication, telecommunication, data, cellular, radio network, and/or other similar type of system.

The UEs 612 may be any of a wide variety of communication devices, including wireless devices arranged, configured, and/or operable to communicate wirelessly with the network nodes 610 and other communication devices. Similarly, the network nodes 610 are arranged, capable, configured, and/or operable to communicate directly or indirectly with the UEs 612 and/or with other network nodes or equipment in the telecommunication network 602 to enable and/or provide network access, such as wireless network access, and/or to perform other functions, such as administration in the telecommunication network 602.

In the depicted example, the core network 606 connects the network nodes 610 to one or more hosts, such as host 616. These connections may be direct or indirect via one or more intermediary networks or devices. In other examples, network nodes may be directly coupled to hosts. The core network 606 includes one more core network nodes (e.g., core network node 608) that are structured with hardware and software components. Features of these components may be substantially similar to those described with respect to the UEs, network nodes, and/or hosts, such that the descriptions thereof are generally applicable to the corresponding components of the core network node 608. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 616 may be under the ownership or control of a service provider other than an operator or provider of the access network 604 and/or the telecommunication network 602, and may be operated by the service provider or on behalf of the service provider. The host 616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 600 of Figure 6 enables connectivity between the UEs, network nodes, and hosts. In that sense, the communication system 600 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 602 is a cellular network that implements 3GPP standardized features. Accordingly, the telecommunication network 602 may support network slicing to provide different logical networks to different devices that are connected to the telecommunication network 602. For example, the telecommunication network 602 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 612 are configured to transmit and/or receive information without direct human interaction. For instance, a UE may be designed to transmit information to the access network 604 on a predetermined schedule, when triggered by an internal or external event, or in response to requests from the access network 604. Additionally, a UE may be configured for operating in single- or multi-Radio Access Technology (RAT) or multi-standard mode. For example, a UE may operate with any one or combination of WiFi, New Radio (NR), and LTE, i.e. be configured for Multi-Radio Dual Connectivity (MR-DC), such as Evolved UMTS Terrestrial RAN (E-UTRAN) NR - Dual Connectivity (EN-DC).

In the example, a hub 614 communicates with the access network 604 to facilitate indirect communication between one or more UEs (e.g., UE 612C and/or 612D) and network nodes (e.g., network node 610B). In some examples, the hub 614 may be a controller, router, content source and analytics, or any of the other communication devices described herein regarding UEs. For example, the hub 614 may be a broadband router enabling access to the core network 606 for the UEs. As another example, the hub 614 may be a controller that sends commands or instructions to one or more actuators in the UEs. Commands or instructions may be received from the UEs, network nodes 610, or by executable code, script, process, or other instructions in the hub 614. As another example, the hub 614 may be a data collector that acts as temporary storage for UE data and, in some embodiments, may perform analysis or other processing of the data. As another example, the hub 614 may be a content source. For example, for a UE that is a Virtual Reality (VR) headset, display, loudspeaker or other media delivery device, the hub 614 may retrieve VR assets, video, audio, or other media or data related to sensory information via a network node, which the hub 614 then provides to the UE either directly, after performing local processing, and/or after adding additional local content. In still another example, the hub 614 acts as a proxy server or orchestrator for the UEs, in particular if one or more of the UEs are low energy IoT devices.

The hub 614 may have a constant/persistent or intermittent connection to the network node 610B. The hub 614 may also allow for a different communication scheme and/or schedule between the hub 614 and UEs (e.g., UE 612C and/or 612D), and between the hub 614 and the core network 606. In other examples, the hub 614 is connected to the core network 606 and/or one or more UEs via a wired connection. Moreover, the hub 614 may be configured to connect to a Machine-to-Machine (M2M) service provider over the access network 604 and/or to another UE over a direct connection. In some scenarios, UEs may establish a wireless connection with the network nodes 610 while still connected via the hub 614 via a wired or wireless connection. In some embodiments, the hub 614 may be a dedicated hub - that is, a hub whose primary function is to route communications to/from the UEs from/to the network node 610B. In other embodiments, the hub 614 may be a non-dedicated hub - that is, a device which is capable of operating to route communications between the UEs and the network node 610B, but which is additionally capable of operating as a communication start and/or end point for certain data channels.

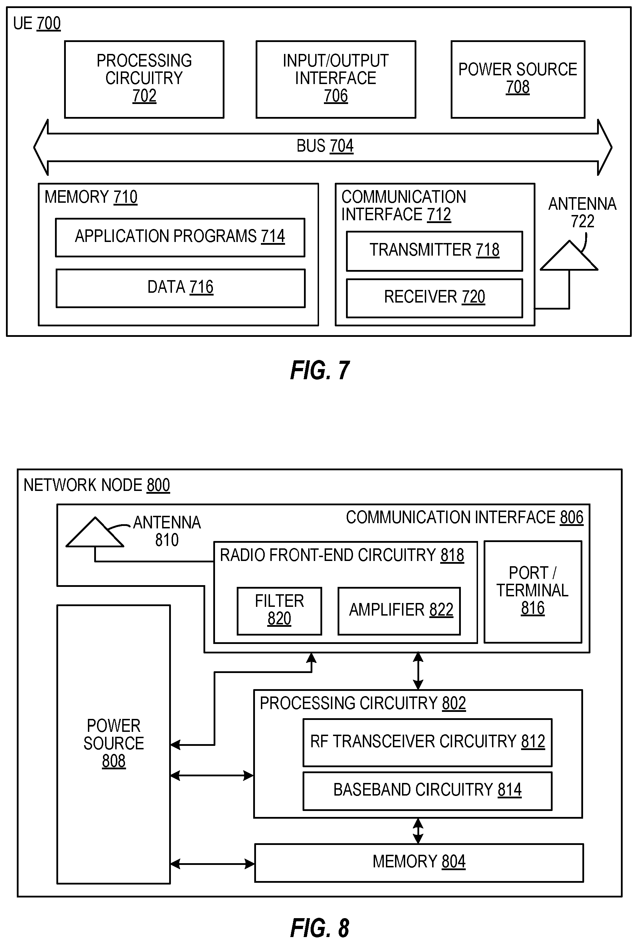

Figure 7 shows a UE 700 in accordance with some embodiments. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 700 includes processing circuitry 702 that is operatively coupled via a bus 704 to an input/output interface 706, a power source 708, memory 710, a communication interface 712, and/or any other component, or any combination thereof. Certain UEs may utilize all or a subset of the components shown in Figure 7. The level of integration between the components may vary from one UE to another UE. Further, certain UEs may contain multiple instances of a component, such as multiple processors, memories, transceivers, transmitters, receivers, etc.

The processing circuitry 702 is configured to process instructions and data and may be configured to implement any sequential state machine operative to execute instructions stored as machine-readable computer programs in the memory 710. The processing circuitry 702 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 702 may include multiple Central Processing Units (CPUs).

In the example, the input/output interface 706 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 700. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 708 is structured as a battery or battery pack. Other types of power sources, such as an external power source (e.g., an electricity outlet), photovoltaic device, or power cell, may be used. The power source 708 may further include power circuitry for delivering power from the power source 708 itself, and/or an external power source, to the various parts of the UE 700 via input circuitry or an interface such as an electrical power cable. Delivering power may be, for example, for charging the power source 708. Power circuitry may perform any formatting, converting, or other modification to the power from the power source 708 to make the power suitable for the respective components of the UE 700 to which power is supplied.

The memory 710 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 710 includes one or more application programs 714, such as an operating system, web browser application, a widget, gadget engine, or other application, and corresponding data 716. The memory 710 may store, for use by the UE 700, any of a variety of various operating systems or combinations of operating systems.

The memory 710 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 710 may allow the UE 700 to access instructions, application programs, and the like stored on transitory or non-transitory memory media, to off-load data, or to upload data. An article of manufacture, such as one utilizing a communication system, may be tangibly embodied as or in the memory 710, which may be or comprise a device-readable storage medium.

The processing circuitry 702 may be configured to communicate with an access network or other network using the communication interface 712. The communication interface 712 may comprise one or more communication subsystems and may include or be communicatively coupled to an antenna 722. The communication interface 712 may include one or more transceivers used to communicate, such as by communicating with one or more remote transceivers of another device capable of wireless communication (e.g., another UE or a network node in an access network). Each transceiver may include a transmitter 718 and/or a receiver 720 appropriate to provide network communications (e.g., optical, electrical, frequency allocations, and so forth). Moreover, the transmitter 718 and receiver 720 may be coupled to one or more antennas (e.g., the antenna 722) and may share circuit components, software, or firmware, or alternatively be implemented separately.

In the illustrated embodiment, communication functions of the communication interface 712 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 712, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or itemtracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 700 shown in Figure 7.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 8 shows a network node 800 in accordance with some embodiments. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), and NR Node Bs (gNBs)).

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 800 includes processing circuitry 802, memory 804, a communication interface 806, and a power source 808. The network node 800 may be composed of multiple physically separate components (e.g., a Node B component and an RNC component, or a BTS component and a BSC component, etc.), which may each have their own respective components. In certain scenarios in which the network node 800 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 800 may be configured to support multiple RATs. In such embodiments, some components may be duplicated (e.g., separate memory 804 for different RATs) and some components may be reused (e.g., an antenna 810 may be shared by different RATs). The network node 800 may also include multiple sets of the various illustrated components for different wireless technologies integrated into network node 800, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 800.

The processing circuitry 802 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 800 components, such as the memory 804, to provide network node 800 functionality.

In some embodiments, the processing circuitry 802 includes a System on a Chip (SOC). In some embodiments, the processing circuitry 802 includes one or more of Radio Frequency (RF) transceiver circuitry 812 and baseband processing circuitry 814. In some embodiments, the RF transceiver circuitry 812 and the baseband processing circuitry 814 may be on separate chips (or sets of chips), boards, or units, such as radio units and digital units. In alternative embodiments, part or all of the RF transceiver circuitry 812 and the baseband processing circuitry 814 may be on the same chip or set of chips, boards, or units.

The memory 804 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 802. The memory 804 may store any suitable instructions, data, or information, including a computer program, software, an application including one or more of logic, rules, code, tables, and/or other instructions capable of being executed by the processing circuitry 802 and utilized by the network node 800. The memory 804 may be used to store any calculations made by the processing circuitry 802 and/or any data received via the communication interface 806. In some embodiments, the processing circuitry 802 and the memory 804 are integrated.

The communication interface 806 is used in wired or wireless communication of signaling and/or data between a network node, access network, and/or UE. As illustrated, the communication interface 806 comprises port(s)/terminal(s) 816 to send and receive data, for example to and from a network over a wired connection. The communication interface 806 also includes radio front-end circuitry 818 that may be coupled to, or in certain embodiments a part of, the antenna 810. The radio front-end circuitry 818 comprises filters 820 and amplifiers 822. The radio front-end circuitry 818 may be connected to the antenna 810 and the processing circuitry 802. The radio front-end circuitry 818 may be configured to condition signals communicated between the antenna 810 and the processing circuitry 802. The radio front-end circuitry 818 may receive digital data that is to be sent out to other network nodes or UEs via a wireless connection. The radio front-end circuitry 818 may convert the digital data into a radio signal having the appropriate channel and bandwidth parameters using a combination of the filters 820 and/or the amplifiers 822. The radio signal may then be transmitted via the antenna 810. Similarly, when receiving data, the antenna 810 may collect radio signals which are then converted into digital data by the radio front-end circuitry 818. The digital data may be passed to the processing circuitry 802. In other embodiments, the communication interface 806 may comprise different components and/or different combinations of components.

In certain alternative embodiments, the network node 800 does not include separate radio front-end circuitry 818; instead, the processing circuitry 802 includes radio front-end circuitry and is connected to the antenna 810. Similarly, in some embodiments, all or some of the RF transceiver circuitry 812 is part of the communication interface 806. In still other embodiments, the communication interface 806 includes the one or more ports or terminals 816, the radio front-end circuitry 818, and the RF transceiver circuitry 812 as part of a radio unit (not shown), and the communication interface 806 communicates with the baseband processing circuitry 814, which is part of a digital unit (not shown).

The antenna 810 may include one or more antennas, or antenna arrays, configured to send and/or receive wireless signals. The antenna 810 may be coupled to the radio front-end circuitry 818 and may be any type of antenna capable of transmitting and receiving data and/or signals wirelessly. In certain embodiments, the antenna 810 is separate from the network node 800 and connectable to the network node 800 through an interface or port.

The antenna 810, the communication interface 806, and/or the processing circuitry 802 may be configured to perform any receiving operations and/or certain obtaining operations described herein as being performed by the network node 800. Any information, data, and/or signals may be received from a UE, another network node, and/or any other network equipment. Similarly, the antenna 810, the communication interface 806, and/or the processing circuitry 802 may be configured to perform any transmitting operations described herein as being performed by the network node 800. Any information, data, and/or signals may be transmitted to a UE, another network node, and/or any other network equipment.

The power source 808 provides power to the various components of the network node 800 in a form suitable for the respective components (e.g., at a voltage and current level needed for each respective component). The power source 808 may further comprise, or be coupled to, power management circuitry to supply the components of the network node 800 with power for performing the functionality described herein. For example, the network node 800 may be connectable to an external power source (e.g., the power grid or an electricity outlet) via input circuitry or an interface such as an electrical cable, whereby the external power source supplies power to power circuitry of the power source 808. As a further example, the power source 808 may comprise a source of power in the form of a battery or battery pack which is connected to, or integrated in, power circuitry. The battery may provide backup power should the external power source fail.

Embodiments of the network node 800 may include additional components beyond those shown in Figure 8 for providing certain aspects of the network node's functionality, including any of the functionality described herein and/or any functionality necessary to support the subject matter described herein. For example, the network node 800 may include user interface equipment to allow input of information into the network node 800 and to allow output of information from the network node 800. This may allow a user to perform diagnostic, maintenance, repair, and other administrative functions for the network node 800.

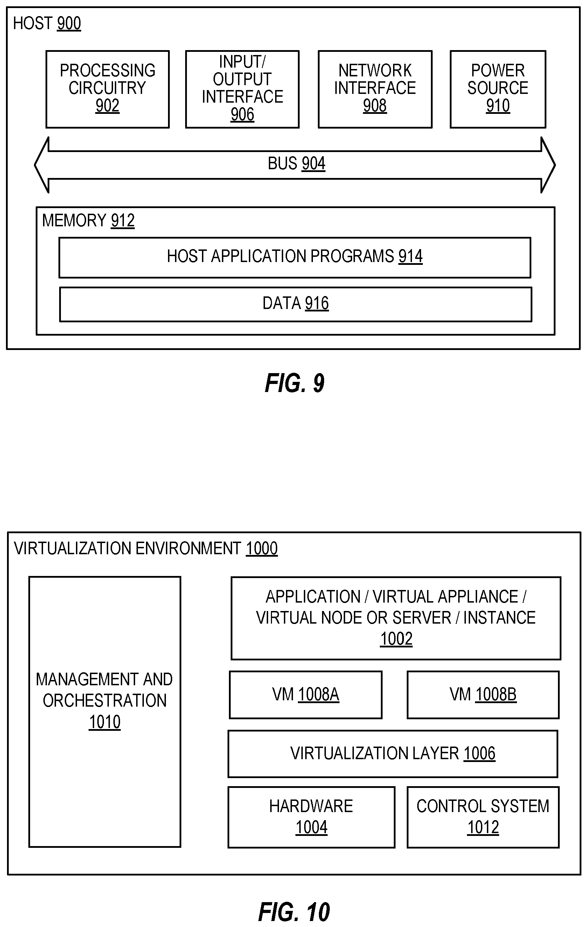

Figure 9 is a block diagram of a host 900, which may be an embodiment of the host 616 of Figure 6, in accordance with various aspects described herein. As used herein, the host 900 may be or comprise various combinations of hardware and/or software including a standalone server, a blade server, a cloud-implemented server, a distributed server, a virtual machine, container, or processing resources in a server farm. The host 900 may provide one or more services to one or more UEs.

The host 900 includes processing circuitry 902 that is operatively coupled via a bus 904 to an input/output interface 906, a network interface 908, a power source 910, and memory 912. Other components may be included in other embodiments. Features of these components may be substantially similar to those described with respect to the devices of previous figures, such as Figures 7 and 8, such that the descriptions thereof are generally applicable to the corresponding components of the host 900.

The memory 912 may include one or more computer programs including one or more host application programs 914 and data 916, which may include user data, e.g. data generated by a UE for the host 900 or data generated by the host 900 for a UE. Embodiments of the host 900 may utilize only a subset or all of the components shown. The host application programs 914 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 914 may also provide for user authentication and licensing checks and may periodically report health, routes, and content availability to a central node, such as a device in or on the edge of a core network. Accordingly, the host 900 may select and/or indicate a different host for Over-The-Top (OTT) services for a UE. The host application programs 914 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 10 is a block diagram illustrating a virtualization environment 1000 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 1000 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1002 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1004 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1006 (also referred to as hypervisors or VM Monitors (VMMs)), provide VMs 1008A and 1008B (one or more of which may be generally referred to as VMs 1008), and/or perform any of the functions, features, and/or benefits described in relation with some embodiments described herein. The virtualization layer 1006 may present a virtual operating platform that appears like networking hardware to the VMs 1008.

The VMs 1008 comprise virtual processing, virtual memory, virtual networking, or interface and virtual storage, and may be run by a corresponding virtualization layer 1006. Different embodiments of the instance of a virtual appliance 1002 may be implemented on one or more of the VMs 1008, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 1008 may be a software implementation of a physical machine that runs programs as if they were executing on a physical, non-virtualized machine. Each of the VMs 1008, and that part of the hardware 1004 that executes that VM, be it hardware dedicated to that VM and/or hardware shared by that VM with others of the VMs 1008, forms separate virtual network elements. Still in the context of NFV, a virtual network function is responsible for handling specific network functions that run in one or more VMs 1008 on top of the hardware 1004 and corresponds to the application 1002.

The hardware 1004 may be implemented in a standalone network node with generic or specific components. The hardware 1004 may implement some functions via virtualization. Alternatively, the hardware 1004 may be part of a larger cluster of hardware (e.g., such as in a data center or CPE) where many hardware nodes work together and are managed via management and orchestration 1010, which, among others, oversees lifecycle management of the applications 1002. In some embodiments, the hardware 1004 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 1012 which may alternatively be used for communication between hardware nodes and radio units.

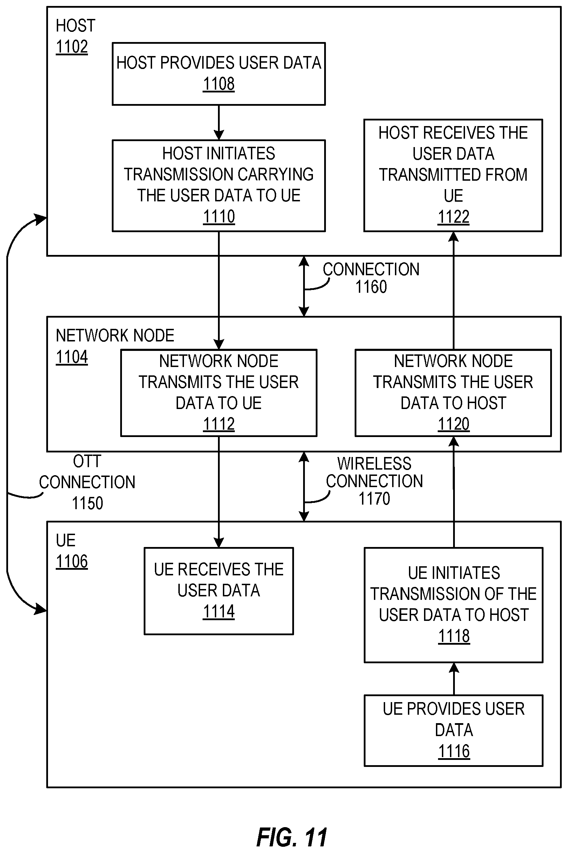

Figure 11 shows a communication diagram of a host 1102 communicating via a network node 1104 with a UE 1106 over a partially wireless connection in accordance with some embodiments. Example implementations, in accordance with various embodiments, of the UE (such as the UE 612A of Figure 6 and/or the UE 700 of Figure 7), the network node (such as the network node 610A of Figure 6 and/or the network node 800 of Figure 8), and the host (such as the host 616 of Figure 6 and/or the host 900 of Figure 9) discussed in the preceding paragraphs will now be described with reference to Figure 11.

Like the host 900, embodiments of the host 1102 include hardware, such as a communication interface, processing circuitry, and memory. The host 1102 also includes software, which is stored in or is accessible by the host 1102 and executable by the processing circuitry. The software includes a host application that may be operable to provide a service to a remote user, such as the UE 1106 connecting via an OTT connection 1150 extending between the UE 1106 and the host 1102. In providing the service to the remote user, a host application may provide user data which is transmitted using the OTT connection 1150.

The network node 1104 includes hardware enabling it to communicate with the host 1102 and the UE 1106 via a connection 1160. The connection 1160 may be direct or pass through a core network (like the core network 606 of Figure 6) and/or one or more other intermediate networks, such as one or more public, private, or hosted networks. For example, an intermediate network may be a backbone network or the Internet.

The UE 1106 includes hardware and software, which is stored in or accessible by the UE 1106 and executable by the UE's processing circuitry. The software includes a client application, such as a web browser or operator-specific "app" that may be operable to provide a service to a human or non-human user via the UE 1106 with the support of the host 1102. In the host 1102, an executing host application may communicate with the executing client application via the OTT connection 1150 terminating at the UE 1106 and the host 1102. In providing the service to the user, the UE's client application may receive request data from the host's host application and provide user data in response to the request data. The OTT connection 1150 may transfer both the request data and the user data. The UE's client application may interact with the user to generate the user data that it provides to the host application through the OTT connection 1150.

The OTT connection 1150 may extend via the connection 1160 between the host 1102 and the network node 1104 and via a wireless connection 1170 between the network node 1104 and the UE 1106 to provide the connection between the host 1102 and the UE 1106. The connection 1160 and the wireless connection 1170, over which the OTT connection 1150 may be provided, have been drawn abstractly to illustrate the communication between the host 1102 and the UE 1106 via the network node 1104, without explicit reference to any intermediary devices and the precise routing of messages via these devices.

As an example of transmitting data via the OTT connection 1150, in step 1108, the host 1102 provides user data, which may be performed by executing a host application. In some embodiments, the user data is associated with a particular human user interacting with the UE 1106. In other embodiments, the user data is associated with a UE 1106 that shares data with the host 1102 without explicit human interaction. In step 1110, the host 1102 initiates a transmission carrying the user data towards the UE 1106. The host 1102 may initiate the transmission responsive to a request transmitted by the UE 1106. The request may be caused by human interaction with the UE 1106 or by operation of the client application executing on the UE 1106. The transmission may pass via the network node 1104 in accordance with the teachings of the embodiments described throughout this disclosure. Accordingly, in step 1112, the network node 1104 transmits to the UE 1106 the user data that was carried in the transmission that the host 1102 initiated, in accordance with the teachings of the embodiments described throughout this disclosure. In step 1114, the UE 1106 receives the user data carried in the transmission, which may be performed by a client application executed on the UE 1106 associated with the host application executed by the host 1102.

In some examples, the UE 1106 executes a client application which provides user data to the host 1102. The user data may be provided in reaction or response to the data received from the host 1102. Accordingly, in step 1116, the UE 1106 may provide user data, which may be performed by executing the client application. In providing the user data, the client application may further consider user input received from the user via an input/output interface of the UE 1106. Regardless of the specific manner in which the user data was provided, the UE 1106 initiates, in step 1118, transmission of the user data towards the host 1102 via the network node 1104. In step 1120, in accordance with the teachings of the embodiments described throughout this disclosure, the network node 1104 receives user data from the UE 1106 and initiates transmission of the received user data towards the host 1102. In step 1122, the host 1102 receives the user data carried in the transmission initiated by the UE 1106.

One or more of the various embodiments improve the performance of OTT services provided to the UE 1106 using the OTT connection 1150, in which the wireless connection 1170 forms the last segment.

In an example scenario, factory status information may be collected and analyzed by the host 1102. As another example, the host 1102 may process audio and video data which may have been retrieved from a UE for use in creating maps. As another example, the host 1102 may collect and analyze real-time data to assist in controlling vehicle congestion (e.g., controlling traffic lights). As another example, the host 1102 may store surveillance video uploaded by a UE. As another example, the host 1102 may store or control access to media content such as video, audio, VR, or AR which it can broadcast, multicast, or unicast to UEs. As other examples, the host 1102 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 1150 between the host 1102 and the UE 1106 in response to variations in the measurement results. The measurement procedure and/or the network functionality for reconfiguring the OTT connection 1150 may be implemented in software and hardware of the host 1102 and/or the UE 1106. In some embodiments, sensors (not shown) may be deployed in or in association with other devices through which the OTT connection 1150 passes; the sensors may participate in the measurement procedure by supplying values of the monitored quantities exemplified above, or by supplying values of other physical quantities from which software may compute or estimate the monitored quantities. The reconfiguring of the OTT connection 1150 may include message format, retransmission settings, preferred routing, etc.; the reconfiguring need not directly alter the operation of the network node 1104. Such procedures and functionalities may be known and practiced in the art. In certain embodiments, measurements may involve proprietary UE signaling that facilitates measurements of throughput, propagation times, latency, and the like by the host 1102. The measurements may be implemented in that software causes messages to be transmitted, in particular empty or 'dummy' messages, using the OTT connection 1150 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole and/or by end users and a wireless network generally.

Those skilled in the art will recognize improvements and modifications to the embodiments of the present disclosure. All such improvements and modifications are considered within the scope of the concepts disclosed herein.

## Claims

1. A method performed by a User Equipment, UE, (500) for a radio network, the method comprising:
receiving (508), from a first radio network node (502), a request for the UE (500) to perform Quality of Experience, QoE, measurements and/or Radio Access Network, RAN, Visible QoE, RVQoE, measurements when in an idle state;
receiving (508), from the first radio network node (502), a request for the UE (500) to transition to the idle state;
receiving (508) QoE information or QoE configuration for the UE (500) to be stored on behalf of the radio network;
storing (508) the QoE information or QoE configuration for the UE (500) on behalf of the radio network;
performing (512) QoE measurements and/or RVQoE measurements while in the idle state;
transmitting (514), to a second radio network node (504), a request to transition from the idle state to a connected state;
receiving (516), from the second radio network node (504), a request for the UE (500) to transition from the idle state to the connected state;
transmitting (518), to the second radio network node (504), the QoE information or QoE configuration for the UE (500) stored by the UE (500) on behalf of the radio network; and one or more QoE measurement reports and/or one or more RVQoE measurement reports comprising QoE measurements and/or RVQoE measurements, respectively, performed while the UE (500) was in the idle state.

2. The method of claim 1 wherein the QoE information or QoE configuration comprises a Measurement Collection Entity, MCE, address of an MCE to which QoE reports from the UE (300) are to be forwarded.

3. The method of claim 1 or 2 wherein the QoE information or QoE configuration comprises an identifier to be used by another radio network node to forward RVQoE report(s) from the UE after the UE returns to the connected state from the idle state.

4. The method of any of claims 1 to 3 further comprising receiving (508) a timer value that defines an amount of time that the UE (500) is to store the QoE information or QoE configuration.

5. The method of any of claims 1 to 4 wherein transmitting (524) one or more QoE measurement reports and/or one or more RVQoE measurement reports comprises transmitting (524) one or more RVQoE measurement reports comprising RVQoE measurements performed by the UE (500) while in the idle state.

6. The method of claim 5 further comprising receiving, from the first radio network node an instruction to, when transmitting the RVQoE measurement reports collected while in the idle state to the second radio network node, also transmit information that indicates that the second radio network node is to forward the RVQoE measurement reports to the first radio network node.

7. The method of claim 6 wherein the information that indicates that the second radio network node is to forward the RVQoE measurement reports to the first radio network node comprises one or more identifiers of the first radio network node.

8. The method of claim 7 wherein the one or more identifiers of the first radio network node comprise an address of the first radio network node or an identifier of the first radio network node.

9. The method of any of claims 5 to 8 further comprising transmitting (524), to the second radio network node (504), an indication that indicates that the one or more RVQoE measurement reports are to be forwarded to the first radio network node (502).

10. The method of any of claims 1 to 9 further comprising transmitting (514 or 522), to the second radio network node (504), an indication that the UE has a QoE report and/or an RVQoE report to transmit.

11. A User Equipment, UE, (500) for a radio network, the UE (500) adapted to:
receive (508), from a first radio network node (502), a request for the UE (500) to perform Quality of Experience, QoE, measurements and/or Radio Access Network, RAN, Visible QoE, RVQoE, measurements when in an idle state;
receive (508), from the first radio network node (502), a request for the UE (500) to transition to the idle state;
receive (508) QoE information or QoE configuration for the UE (500) to be stored on behalf of the radio network;
store (508) the QoE information or QoE configuration for the UE (500) on behalf of the radio network;
perform (512) QoE measurements and/or RVQoE measurements while in the idle state, in accordance with the received request;
transmit (514), to a second radio network node (504), a request to transition from the idle state to a connected state;
receive (516), from the second radio network node (504), a request for the UE (500) to transition from the idle state to the connected state;
transmit (518), to the second radio network node (504), the QoE information or QoE configuration for the UE (500) that is stored by the UE (500) on behalf of the radio network; and
transmit (524), to the second radio network node (504), one or more QoE measurement reports and/or one or more RVQoE measurement reports comprising QoE measurements and/or RVQoE measurements, respectively, performed while the UE (500) was in the idle state.

12. The UE (500) of claim 11 further adapted to perform the method of any of claims 2 to 10.

## Patentansprüche

1. Verfahren, das von einer Benutzereinrichtung, UE, (500) für ein Funknetzwerk durchgeführt wird, wobei das Verfahren Folgendes umfasst:
Empfangen (508) einer Anforderung von einem ersten Funknetzwerkknoten (502) für die UE (500) zum Durchführen von Quality of Experience-Messungen, QoE-Messungen, und/oder Radio Access Network-,RAN-,Visible QoE-Messungen, RVQoE-Messungen, wenn in einem Ruhezustand;
Empfangen (508) einer Anforderung von dem ersten Funknetzwerkknoten (502) für die UE (500) zum Übergehen in den Ruhezustand;
Empfangen (508) von QoE-Informationen oder einer QoE-Konfiguration für die UE (500), die im Auftrag des Funknetzwerks gespeichert werden sollen;
Speichern (508) der QoE-Informationen oder der QoE-Konfiguration für die UE (500) im Auftrag des Funknetzwerks;
Durchführen (512) von QoE-Messungen und/oder RVQoE-Messungen, während im Ruhezustand;
Senden (514) einer Anforderung zum Übergehen von einem Ruhezustand in einen verbundenen Zustand an einen zweiten Netzwerkknoten (504);
Empfangen (516) einer Anforderung von dem zweiten Funknetzwerkknoten (504) für die UE (500) zum Übergehen vom Ruhezustand in den verbundenen Zustand;
Senden (518) der QoE-Informationen oder der QoE-Konfiguration für die UE (500), die von der UE (500) im Auftrag des Funknetzwerks gespeichert werden; und eines oder mehrerer QoE-Messberichte und/oder eines oder mehrerer RVQoE-Messberichte, die QoE-Messungen bzw. RVQoE-Messungen umfassen, die durchgeführt wurden, während die UE (500) im Ruhezustand war, an den zweiten Netzwerkknoten (504).

2. Verfahren nach Anspruch 1, wobei die QoE-Informationen oder die QoE-Konfiguration eine Measurement Collection Entity-Adresse, MCE-Adresse, einer MCE umfassen, an die die QoE-Berichte von der UE (300) weitergeleitet werden sollen.

3. Verfahren nach Anspruch 1 oder 2, wobei die QoE-Informationen oder die QoE-Konfiguration eine Kennung umfassen, die von einem anderen Funknetzwerkknoten zum Weiterleiten von RVQoE-Bericht(en) von der UE nach der Rückkehr der UE aus dem Ruhezustand in den verbundenen Zustand verwendet werden soll.

4. Verfahren nach einem der Ansprüche 1 bis 3, ferner umfassend Empfangen (508) eines Zeitgeberwerts, der eine Zeitdauer definiert, die die UE (500) die QoE-Informationen oder die QoE-Konfiguration speichern soll.

5. Verfahren nach einem der Ansprüche 1 bis 4, wobei das Senden (524) eines oder der mehrerer QoE-Messberichte und/oder eines oder mehrerer RVQoE-Messberichte Senden (524) eines oder mehrerer RVQoE-Messberichte umfasst, die RVQoE-Messungen umfassen, die von der UE (500) durchgeführt wurden, während sie im Ruhezustand war.

6. Verfahren nach Anspruch 5, ferner umfassend Empfangen einer Anweisung von dem ersten Funknetzwerkknoten, beim Senden der während des Ruhezustands erfassten RVQoE-Messberichte an den zweiten Funknetzwerkknoten auch Informationen zu senden, die angeben, dass der zweite Funknetzwerkknoten die RVQoE-Messberichte an den ersten Funknetzwerkknoten weiterleiten soll.

7. Verfahren nach Anspruch 6, wobei die Informationen, die angeben, dass der zweite Funknetzwerkknoten die die RVQoE-Messberichte an den ersten Funknetzwerkknoten weiterleiten soll, eine oder mehrere Kennungen des ersten Funknetzwerkknotens umfassen.

8. Verfahren nach Anspruch 7, wobei die eine oder die mehreren Kennungen des ersten Funknetzwerkknotens eine Adresse des ersten Funknetzwerkknotens oder eine Kennung des ersten Funknetzwerkknotens umfassen.

9. Verfahren nach einem der Ansprüche 5 bis 8, ferner umfassend Senden (524) einer Angabe an den zweiten Funknetzwerkknoten (504), die angibt, dass der eine oder die mehreren RVQoE-Messberichte an den ersten Funknetzwerkknoten (502) weitergeleitet werden sollen.

10. Verfahren nach einem der Ansprüche 1 bis 9, ferner umfassend Senden (514 oder 522) einer Angabe an den zweiten Funknetzwerkknoten (504), dass die UE einen QoE-Bericht und/oder einen RVQoE-Bericht zu senden hat.

11. Benutzereinrichtung, UE, (500) für ein Funknetzwerk, wobei die UE (500) zu Folgendem ausgelegt ist:
Empfangen (508) einer Anforderung von einem ersten Funknetzwerkknoten (502) für die UE (500) zum Durchführen von Quality of Experience-Messungen, QoE-Messungen, und/oder Radio Access Network-,RAN-,Visible QoE-Messungen, RVQoE-Messungen, wenn in einem Ruhezustand;
Empfangen (508) einer Anforderung von dem ersten Funknetzwerkknoten (502) für die UE (500) zum Übergehen in den Ruhezustand;
Empfangen (508) von QoE-Informationen oder einer QoE-Konfiguration für die UE (500), die im Auftrag des Funknetzwerks gespeichert werden sollen;
Speichern (508) der QoE-Informationen oder der QoE-Konfiguration für die UE (500) im Auftrag des Funknetzwerks;
Durchführen (512) von QoE-Messungen und/oder RVQoE-Messungen, während im Ruhezustand, gemäß der empfangenen Anforderung;
Senden (514) einer Anforderung zum Übergehen von einem Ruhezustand in einen verbundenen Zustand an einen zweiten Netzwerkknoten (504);
Empfangen (516) einer Anforderung von dem zweiten Funknetzwerkknoten (504) für die UE (500) zum Übergehen vom Ruhezustand in den verbundenen Zustand;
Senden (518) der QoE-Informationen oder der QoE-Konfiguration für die UE (500), die von der UE (500) im Auftrag des Funknetzwerks gespeichert werden, an den zweiten Funknetzwerkknoten (504); und
Senden (524) eines oder mehrerer QoE-Messberichte und/oder eines oder mehrerer RVQoE-Messberichte, die QoE-Messungen bzw. RVQoE-Messungen umfassen, die durchgeführt wurden, während die UE (500) im Ruhezustand war, an den zweiten Netzwerkknoten (504).

12. UE (500) nach Anspruch 11, die ferner zum Durchführen des Verfahrens nach einem der Ansprüche 2 bis 10 ausgelegt ist.

## Revendications

1. Procédé réalisé par un équipement utilisateur, UE, (500) pour un réseau radio, le procédé comprenant :
la réception (508), depuis un premier nœud de réseau radio (502), d'une demande à l'UE (500) de réaliser des mesures de qualité d'expérience, QoE, et/ou des mesures de QoE visible de réseau d'accès radio, RAN, RVQoE, lorsqu'il se trouve dans un état de veille ;
la réception (508), depuis le premier nœud de réseau radio (502), d'une demande à l'UE (500) de transitionner dans l'état de veille ;
la réception (508) d'informations de QoE ou d'une configuration de QoE pour l'UE (500) à stocker pour le compte du réseau radio ;
le stockage (508) des informations de QoE ou de la configuration de QoE pour l'UE (500) pour le compte du réseau radio ;
la réalisation (512) de mesures de QoE et/ou de mesures de RVQoE dans l'état de veille ;
la transmission (514), à un deuxième nœud de réseau radio (504), d'une demande de transition de l'état de veille à un état connecté ;
la réception (516), depuis le deuxième nœud de réseau radio (504), d'une demande à l'UE (500) de transitionner de l'état de veille à l'état connecté ;
la transmission (518), au deuxième nœud de réseau radio (504), des informations de QoE ou de la configuration de QoE pour l'UE (500) stockées par l'UE (500) pour le compte du réseau radio ; et d'un ou plusieurs rapports de mesures de QoE et/ou d'un ou plusieurs rapports de mesures de RVQoE comprenant des mesures de QoE et/ou des mesures de RVQoE respectivement réalisées pendant que l'UE (500) se trouvait dans l'état de veille.

2. Procédé selon la revendication 1, dans lequel les informations de QoE ou la configuration de QoE comprennent une adresse d'entité de collecte de mesures, MCE, d'une MCE à laquelle des rapports de QoE de l'UE (300) doivent être transférés.

3. Procédé selon la revendication 1 ou 2, dans lequel les informations de QoE ou la configuration de QoE comprennent un identifiant à utiliser par un autre nœud de réseau radio pour transférer un ou plusieurs rapports de RVQoE de l'UE après que l'UE repasse de l'état de veille à l'état connecté.

4. Procédé selon l'une quelconque des revendications 1 à 3, comprenant en outre la réception (508) d'une valeur de minuterie qui définit une quantité de temps pendant laquelle l'UE (500) doit stocker les informations de QoE ou la configuration de QoE.

5. Procédé selon l'une quelconque des revendications 1 à 4, dans lequel la transmission (524) d'un ou plusieurs rapports de mesures de QoE et/ou d'un ou plusieurs rapports de mesures de RVQoE comprend la transmission (524) d'un ou plusieurs rapports de mesures de RVQoE comprenant des mesures de RVQoE réalisées par l'UE (500) pendant qu'il se trouve dans l'état de veille.

6. Procédé selon la revendication 5, comprenant en outre la réception, depuis le premier nœud de réseau radio, d'une instruction pour, lors de la transmission des rapports de mesures de RVQoE collectés dans l'état de veille au deuxième nœud de réseau radio, transmettre également des informations qui indiquent que le deuxième nœud de réseau radio doit transférer les rapports de mesures de RVQoE au premier nœud de réseau radio.

7. Procédé selon la revendication 6, dans lequel les informations qui indiquent que le deuxième nœud de réseau radio doit transférer les rapports de mesures de RVQoE au premier nœud de réseau radio comprennent un ou plusieurs identifiants du premier nœud de réseau radio.

8. Procédé selon la revendication 7, dans lequel le ou les identifiants du premier nœud de réseau radio comprennent une adresse du premier nœud de réseau radio ou un identifiant du premier nœud de réseau radio.

9. Procédé selon l'une quelconque des revendications 5 à 8, comprenant en outre la transmission (524), au deuxième nœud de réseau radio (504), d'une indication qui indique que le ou les rapports de mesures de RVQoE doivent être transférés au premier nœud de réseau radio (502).

10. Procédé selon l'une quelconque des revendications 1 à 9, comprenant en outre la transmission (514 ou 522), au deuxième nœud de réseau radio (504), d'une indication que l'UE a un rapport de QoE et/ou un rapport de RVQoE à transmettre.

11. Equipement utilisateur, UE, (500) pour un réseau radio, l'UE (500) étant adapté pour :
recevoir (508), depuis un premier nœud de réseau radio (502), une demande à l'UE (500) de réaliser des mesures de qualité d'expérience, QoE, et/ou des mesures de QoE visible de réseau d'accès radio, RAN, RVQoE, lorsqu'il se trouve dans un état de veille ;
recevoir (508), depuis le premier nœud de réseau radio (502), une demande à l'UE (500) de transitionner dans l'état de veille ;
recevoir (508) des informations de QoE ou une configuration de QoE pour l'UE (500) à stocker pour le compte du réseau radio ;
stocker (508) les informations de QoE ou la configuration de QoE pour l'UE (500) pour le compte du réseau radio ;
réaliser (512) des mesures de QoE et/ou des mesures de RVQoE dans l'état de veille, conformément à la demande reçue ;
transmettre (514), à un deuxième nœud de réseau radio (504), une demande de transition de l'état de veille à un état connecté ;
recevoir (516), depuis le deuxième nœud de réseau radio (504), une demande à l'UE (500) de transitionner de l'état de veille à l'état connecté ;
transmettre (518), au deuxième nœud de réseau radio (504), les informations de QoE ou la configuration de QoE pour l'UE (500) qui sont stockées par l'UE (500) pour le compte du réseau radio ; et
transmettre (524), au deuxième nœud de réseau radio (504), un ou plusieurs rapports de mesures de QoE et/ou un ou plusieurs rapports de mesures de RVQoE comprenant des mesures de QoE et/ou des mesures de RVQoE respectivement réalisées pendant que l'UE (500) se trouvait dans l'état de veille.

12. UE (500) selon la revendication 11, adapté en outre pour réaliser le procédé selon l'une quelconque des revendications 2 à 10.
